(19)

**Europäisches Patentamt**
**European Patent Office**
**Office européen des brevets**

(11) **EP 4 164 866 B1**

(12) **EUROPÄISCHE PATENTSCHRIFT**

(45) Veröffentlichungstag und Bekanntmachung des Hinweises auf die Patenterteilung:
**23.10.2024 Patentblatt 2024/43**

(21) Anmeldenummer: **21742065.2**

(22) Anmeldetag: **30.06.2021**

(51) Internationale Patentklassifikation (IPC):
**B29C 64/112** (2017.01)    **B29C 64/209** (2017.01)
**B29C 64/393** (2017.01)    **B33Y 10/00** (2015.01)
**B33Y 30/00** (2015.01)    **B33Y 50/02** (2015.01)

(52) Gemeinsame Patentklassifikation (CPC):
**B29C 64/112; B29C 64/209; B29C 64/393;**
**B33Y 10/00; B33Y 30/00; B33Y 50/02**

(86) Internationale Anmeldenummer:
**PCT/EP2021/068066**

(87) Internationale Veröffentlichungsnummer:
**WO 2022/003055 (06.01.2022 Gazette 2022/01)**

(54) **VERFAHREN UND VORRICHTUNGEN ZUR HERSTELLUNG VON DREIDIMENSIONALEN FORMTEILEN**

METHOD AND DEVICES FOR PRODUCING THREE-DIMENSIONAL MOULDED PARTS

PROCÉDÉ ET DISPOSITIFS DE FABRICATION DE PIÈCES MOULÉES TRIDIMENSIONNELLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.06.2020 DE 102020117248**

(43) Veröffentlichungstag der Anmeldung:
**19.04.2023 Patentblatt 2023/16**

(73) Patentinhaber: **Liqtra GmbH**
**21129 Hamburg (DE)**

(72) Erfinder:
• **KRIEGLSTEINER, Joscha**
**20359 Hamburg (DE)**
• **BEHR, Matthias**
**21614 Buxtehude (DE)**

(74) Vertreter: **Andresen, Heiko**
**Hansepatent Patentanwälte**
**Andresen Scholz PartG mbB**
**Poststraße 33**
**20354 Hamburg (DE)**

(56) Entgegenhaltungen:
EP-A1- 3 414 521     US-A1- 2016 311 159
US-A1- 2017 157 831     US-A1- 2019 030 819
US-A1- 2019 152 154     US-A1- 2019 322 044

**Beschreibung**

Gebiet der Erfindung

Die vorliegende Erfindung betrifft Verfahren und Vorrichtungen auf dem Gebiet der additiven Fertigungsverfahren, auch als 3D-Druck bezeichnet, insbesondere im Bereich der sogenannten Schmelzschicht-Verfahren wie z. B. "Fused Layer Modeling" (FLM) bzw. "Fused Deposition Modeling" (FDM) oder "Fused Filament Fabrication" (FFF).

Hintergrund der Erfindung

Als additive Fertigungsverfahren oder 3D-Druck werden im Allgemeinen Fertigungsverfahren bezeichnet, bei denen ein Werkstoff schichtweise auf einer Oberfläche aufgetragen und auf diese Weise sukzessive dreidimensionale Gegenstände (nachfolgend auch als "Formteile" oder "Werkstücke" bezeichnet) erzeugt werden.

Ein typischer 3D-Drucker ist eine elektromechanische Vorrichtung mit einen Druckkopf, einer Druckplattform bzw. -oberfläche und mechanischen Aktuatoren, mit deren Hilfe der Druckkopf relativ zur Druckoberfläche entlang der x-, y- und/oder z-Achse eines kartesischen Koordinatenraums verfahrbar ist. Der Druckkopf ist dazu ausgebildet, während des Verfahrens den Werkstoff aus einer oder mehreren Öffnungen bzw. Düsen in Richtung der Druckoberfläche auszutragen, um die einzelnen Schichten zu erzeugen. Dieser Vorgang wird nachfolgend auch als "Extrudieren" oder "Extrusion" und der Werkstoff dementsprechend als "Extrusionsmaterial" bezeichnet.

Der schichtweise Aufbau erfolgt in der Regel computergesteuert nach vorgegebenen Maßen und Formen anhand eines digitalen Modells des zu erzeugenden Gegenstandes.

Zur Erzeugung einer Schicht wird üblicherweise mit dem Druckkopf eine parallel zur x- und y-Achse liegende Arbeitsebene abgefahren und währenddessen mithilfe des Druckkopfes der Werkstoff an definierten Positionen entlang eines Druckpfades auf die Oberfläche aufgetragen, um Kontur-, Innen- und/oder Stützbereiche auszubilden. Zwischen zwei aufeinanderfolgenden Schichten wird der Abstand zwischen dem Druckkopf und der Oberfläche in der z-Achse vergrößert, sodass die Schichten entlang der z-Achse "stapelnd" übereinander angeordnet werden. Die einzelnen Schichten verbinden sich in der Folge zu einem komplexen Formteil.

Nachteilig an herkömmlichen 3D-Druckverfahren sind unter anderem eine relativ geringe Aufbaugeschwindigkeit und dementsprechend lange Fertigungszeiten von vielen Stunden bis hin zu mehreren Tagen, die auch in hohen Fertigungskosten der Werkstücke resultieren können.

Im Stand der Technik sind verschiedene Lösungsvorschläge zur Beschleunigung des 3D-Drucks durch Erhöhung des Materialdurchsatzes bekannt. Eine Möglichkeit beinhaltet die Erhöhung der Düsenanzahl des Druckkopfes, um durch den simultanen Einsatz mehrerer Düsen den Materialdurchsatz zu steigern.

Aus US 2016/0325498 A1 ist eine 3D-Druckvorrichtung bekannt, die auf einem zweidimensionalen Mehrdüsen-Druckkopf mit rasterförmig versetzter Düsenanordnung basiert. US 8,827,684 B1 offenbart einen 3D-Drucker, bei dem vier jeweils mehrdüsige Druckköpfe fest um eine zentrale Mittelachse angeordnet sind. Weitere Mehrdüsen-Druckköpfe mit ein- oder zweidimensionaler Düsenanordnung sind z. B. aus WO 2015/153400 A1 bekannt.

Ein weiterer Lösungsweg besteht darin, mithilfe von mehrdüsigen Druckköpfen, die während des Materialaustrags rotiert werden können, die Flexibilität der Düsennutzung während des Druckvorgangs zu erhöhen und dadurch das 3D-Druckverfahren zusätzlich zu beschleunigen.

Aus US 2017/0157828 A1 und US 2017/0157831 A1 sind Vorrichtungen und Verfahren für den 3D-Druck bekannt, bei denen mithilfe eines rotierbaren Druckkopfes der Abstand zwischen den verschiedenen Düsen im Druckkopf quer zur Prozessrichtung kontinuierlich variiert werden kann. WO 2017/215641A1 offenbart eine weitere Vorrichtung für den 3D-Druck, deren Druckkopf aus mehreren hintereinandergeschalteten Segmenten einzeln oder paarweise angeordneter Düsen besteht. Die Segmente sind über Rotationslager miteinander verbunden und ermöglichen auf diese Weise eine flexible Anpassung der Düsenabstände während des Druckvorgangs.

Problematisch ist, dass rotationsfähige Mehrdüsen-Drückköpfe technisch komplex und typischerweise mit einem hohen Regelungs- und Wartungsaufwand verbunden sind. Mit solchen Druckvorrichtungen lässt sich deshalb zwar einerseits ein erhöhter Materialdurchsatz erreichen, andererseits werden aber in der Regel auch deutlich höhere Betriebskosten verursacht, sodass eine Verringerung der Prozesszeit oft zulasten der Wirtschaftlichkeit des 3D-Drucks geht.

US 2017/0157831 A1 offenbart ein Verfahren zum Betrieb von Mehrdüsenextrusionsdruckköpfen in 3D-Druckern.

US 2019/0152154 A1 offenbart ein Verfahren zur Einstellung der Geschwindigkeit eines Mehrdüsenextruders in Bezug auf dessen Winkelausrichtung.

US 2019/0030819 A1 offenbart ein Verfahren zur Justierung der Ausrichtung eines Mehrdüsenextruders in 3D-Druckern.

US 2019/0322044 A1 offenbart ein Verfahren zur Dosierung von Extrusionsmaterial in der additiven Fertigung.

EP 3414521 A1 offenbart ein integriertes Mess- und additives Fertigungsverfahren.

US 2016/311159 A1 offenbart ein weiteres Verfahren zur Herstellung eines Objekts mittels additiver Fertigung.

Es ist daher eine Aufgabe der vorliegenden Erfindung, verbesserte Verfahren und Vorrichtungen zur Herstellung von dreidimensionalen Formteilen bereitzustellen, welche diese Probleme zumindest teilweise lösen.

Diese Aufgabe wird erfindungsgemäß durch die Gegenstände der unabhängigen Ansprüche gelöst. Bevorzugte und vorteilhafte Ausführungsformen sind Gegenstand der abhängigen Ansprüche.

Beschreibung der Erfindung

Gemäß einem ersten Aspekt der Erfindung wird ein Verfahren zur Herstellung eines dreidimensionalen Formteils, entsprechend der Verfahrensschritte des Anspruchs 1, angegeben.

Das erfindungsgemäße Verfahren geht davon aus, dass mit einem Druckkopf ein Extrusionsmaterial in mehreren, entlang einer z-Achse übereinander angeordneten Schichten auf eine Druckfläche aufgetragen wird. Während des Auftragens werden zwischen dem Druckkopf und der Druckfläche Relativbewegungen in einer x-Achse und/oder einer y-Achse einer sich senkrecht zur z-Achse erstreckenden x,y-Achsenebene durchgeführt. Beispielsweise kann der Druckkopf relativ zur Druckfläche in verschiedene Richtungen parallel oder zumindest abschnittsweise parallel zur x,y-Achsenebene bewegt werden. Die Druckfläche kann grundsätzlich senkrecht zur z-Achse bzw. parallel zur x,y-Achsenebene angeordnet sein, in denen die Relativbewegungen des Druckkopfes erfolgen, aber auch andere Anordnungen in Bezug zur x-, y- und z-Achse, sind z. B. durch Kippen bzw. Neigen der Druckfläche möglich. Auch im Übrigen ist die Art der Druckfläche in dem erfindungsgemäßen Verfahren nicht sonderlich beschränkt und kann z. B. eine Druckplattform, ein Drucktisch oder ein sonstiger geeigneter Untergrund einschließlich eines anderen Werkstücks bzw. eines Teils davon sein. Die Relativbewegung des Druckkopfes in Bezug zur Druckfläche kann hierbei grundsätzlich durch ein Verfahren des Druckkopfes oder ein Verfahren und/oder Rotieren der Druckfläche sowie durch Kombinationen davon realisiert werden.

Weiterhin geht das erfindungsgemäße Verfahren davon aus, dass der Druckkopf auf einer der Druckfläche zugewandten Ausgabeseite mindestens eine sich linear erstreckende Öffnungszeile mit zwei oder mehr Extrusionsöffnungen zum Austragen des Extrusionsmaterials aufweist. Vorzugsweise weist der Druckkopf eine Mehrzahl von Extrusionsöffnungen auf, wobei die sich linear erstreckende Öffnungszeile in bevorzugten Ausführungen mindestens drei, mindestens vier, mindestens fünf oder mehr Extrusionsöffnungen zum Austragen des Extrusionsmaterials umfasst bzw. aus diesen gebildet ist, die besonders bevorzugt in gleichmäßigen Abständen voneinander angeordnet sind. Der Druckkopf ist auf die Orientierung der Öffnungszeile in der x,y-Achsenebene bezogen in einem Einstellwinkel $\alpha$ in der x,y-Achsenebene ausgerichtet. So, wie der Begriff hier verwendet wird, definiert der "Einstellwinkel" insbesondere denjenigen Winkel, welcher auf die x,y-Achsenebene bezogen im mathematisch positiven Drehsinn zwischen der x-Achse und der sich linear erstreckende Öffnungszeile vorliegt.

Das erfindungsgemäße Verfahren umfasst die folgenden Schritte: A) Durchführen einer Relativbewegung mit einem ersten Einstellwinkel $\alpha$ des Druckkopfes in eine erste Bewegungsrichtung bei gleichzeitigem Austrag des Extrusionsmaterials durch mindestens zwei Extrusionsöffnungen der Öffnungszeile, B) Durchführen einer Relativbewegung mit dem ersten Einstellwinkel $\alpha$ des Druckkopfes in eine von der ersten Bewegungsrichtung abweichende zweite Bewegungsrichtung bei gleichzeitigem Austrag des Extrusionsmaterials durch die mindestens zwei Extrusionsöffnungen aus Schritt A).

So, wie die Begriffe hier verwendet werden, sind "erste Bewegungsrichtung" und "zweite Bewegungsrichtung" als zwei unterschiedliche Bewegungsrichtungen zu verstehen, d. h. der Druckkopf wird in den Schritten A) und B) in verschiedene Richtungen bewegt. Entsprechend ist unter dem Begriff "erster Einstellwinkel $\alpha$" in den Schritten A) und B) derselbe Einstellwinkel $\alpha$ zu verstehen, d. h. der erste Einstellwinkel $\alpha$ wird während der Durchführung der Schritte A) und B) unverändert beibehalten. Mit anderen Worten umfasst das Verfahren die Durchführung einer Richtungsänderung der Druckkopfbewegung mit einem unveränderten Einstellwinkel $\alpha$ des Druckkopfes. Bei der Relativbewegung in den Schritten A) und B) kann es sich um dieselbe, insbesondere eine durchgehende bzw. kontinuierliche, Relativbewegung oder um zwei verschiedene, z. B. eine erste Relativbewegung in Schritt A) und eine zweite Relativbewegung in Schritt B), handeln. Das Verfahren sieht dabei sowohl die Möglichkeit vor, dass der Druckkopf vor der Durchführung der Schritte A) und B) bzw. außerhalb des Betriebes im ersten Einstellwinkel $\alpha$ einstellbar ist, z. B. um den Einstellwinkel an die Gestalt des herzustellenden Formteils anzupassen, als auch die Möglichkeit, dass der Einstellwinkel des Druckkopfes technisch vorgegeben und nicht veränderbar ist, d. h. der Druckkopf weist insbesondere keine eigene Rotationsachse auf.

Hierbei charakterisiert das erfindungsgemäße Verfahren, dass in Schritt B) mit mindestens einer der mindestens zwei Extrusionsöffnungen in der zweiten Bewegungsrichtung eine breitere oder schmalere Materialbahn des Extrusionsmaterials auf der Druckfläche und/oder einer der darauf angeordneten Schichten aufgetragen wird als in der ersten Bewegungsrichtung in Schritt A).

Die Erfinder haben in diesem Zusammenhang erkannt, dass eine bewegungsrichtungsabhängige Variation der Materialbahnbreite durch eine oder mehrere Extrusionsöffnungen des Druckkopfes in herkömmlichen 3D-Druckverfahren mit Mehrdüsen-Druckköpfen, die einen gleichzeitigen Materialaustrag durch mehrere Extrusionsöffnungen (nachfolgend auch als "Parallelextrusion" bezeichnet) beinhalten, einen in dieser Form bisher unerkannten Freiheitsgrad darstellt. Durch die Erschließung dieses zusätzlichen Freiheitsgrades erreichen die Erfinder eine vorteilhafte Teilentkopplung der realisierbaren Druckrichtung von der Druckkopfgeometrie und der Druckkopfausrichtung. Dies ermöglicht eine flexiblere und effizientere Nutzung der verfügbaren Extrusionsöffnungen eines 3D-Druckkopfes und löst dadurch z. B. das Problem, ohne eine technisch aufwändige Rotation des Druckkopfes über einen erweiterten Bereich von Verfahrwinkeln durchgängige und ungestörte Materialbahnen bzw. vollgefüllte Flächenabschnitte bei gleichzeitig hohem Materialdurchsatz zu erzeugen. Auf diese Weise lässt sich die Anzahl der zur Herstellung des Formteils erforderlichen Verfahrbewegungen des Druckkopfes gegenüber herkömmlichen 3D-Druckverfahren insgesamt reduzieren und die Dauer des Herstellungsverfahrens signifikant verkürzen. Diesbezüglich wird auch auf die nachfolgenden Ausführungsbeispiele verwiesen. Gleichzeitig gewährleistet der Verzicht auf eine Rotation des Druckkopfes während der Relativbewegung eine einfache und daher kostengünstige und wartungsarme technische Ausführung der 3D-Druckvorrichtung.

Es versteht sich, dass auch ein Verfahrensschritt C) Durchführen einer bzw. mindestens einer weiteren Relativbewegung mit dem ersten Einstellwinkel $\alpha$ des Druckkopfes in eine von der ersten und/oder zweiten Bewegungsrichtung abweichende weitere Bewegungsrichtung bei gleichzeitigem Austrag des Extrusionsmaterials durch die mindestens zwei Extrusionsöffnungen aus Schritt A) und/oder Schritt B) durchgeführt werden kann, wobei wiederum mit mindestens einer der mindestens zwei Extrusionsöffnungen in der weiteren Bewegungsrichtung eine breitere oder schmalere Materialbahn des Extrusionsmaterials auf der Druckfläche und/oder einer der darauf angeordneten Schichten aufgetragen wird als in der ersten Bewegungsrichtung in Schritt A) und/oder der zweiten Bewegungsrichtung in Schritt B). Selbstverständlich sind auch beliebige weitere erfindungsgemäße Verfahrensschritte bzw. Wiederholungen der Schritte A), B) und/oder C) möglich. Die Reihenfolge der Schritte A) und B) sowie ggf. C) ist nicht sonderlich beschränkt. Grundsätzlich können die Schritte A), B) und/oder C) direkt aufeinanderfolgend im Verfahren durchgeführt werden, aber auch andere Varianten, in denen zwischen den Schritten A) und B) bzw. B) und C) weitere Schritte bzw. weitere Relativbewegungen durchgeführt werden, sind möglich.

Um die breitere oder schmalere Materialbahn des Extrusionsmaterials aufzutragen, ist vorgesehen, dass in Schritt B) durch die mindestens eine der mindestens zwei Extrusionsöffnungen ein größeres bzw. kleineres Materialvolumen des Extrusionsmaterials im Verhältnis zur Streckenlänge der durchgeführten Relativbewegung ausgetragen wird als in Schritt A). Mit anderen Worten wird in Schritt B) im Vergleich zu Schritt A) der relative Materialaustrag des Extrusionsmaterials pro Verfahrstrecke des Druckkopfes aus der mindestens einen Extrusionsöffnung vergrößert oder verringert.

Hierbei umfasst Schritt B) eine Veränderung des Austrags des Extrusionsmaterials pro Zeit durch die mindestens eine der mindestens zwei Extrusionsöffnungen, um die breitere oder schmalere Materialbahn des Extrusionsmaterials auf der Druckfläche und/oder einer der darauf angeordneten Schichten aufzutragen. Eine Veränderung des Austrags des Extrusionsmaterials pro Zeit kann eine Vergrößerung oder eine Verringerung des ausgetragenen Materialvolumens und/oder der ausgetragenen Materialmasse des Extrusionsmaterials pro Zeit sein. Der Austrag des Extrusionsmaterials pro Zeit wird nachfolgend auch synonym als Materialförderrate bezeichnet. Während grundsätzlich die Materialbahnbreite auch durch eine Veränderung der Verfahrgeschwindigkeit des Druckkopfes bei einer gegebenen Materialförderrate variiert werden kann, hat die erfindungsgemäße Veränderung der Materialförderrate den erheblichen Vorteil, dass die Prozesszeit insbesondere bei der Erzeugung breiter Materialbahnen nicht nachteilig beeinflusst wird. Diesbezüglich wird auch auf die nachfolgenden Ausführungsbeispiele verwiesen. Hinzu kommt, dass die Extrusionsöffnungen in dieser erfindungsgemäßen Ausführung mit unterschiedlichen Materialförderraten beaufschlagt werden können, um jeweils voneinander unterschiedliche Materialbahnbreiten zu erzeugen, wohingegen die Veränderung der Verfahrgeschwindigkeit des Druckkopfes zwangsläufig eine kollektive Veränderung der Bahnbreite sämtlicher Extrusionsöffnungen des Druckkopfes bewirkt.

In bevorzugten Ausführungsformen umfasst Schritt B) sowohl eine Veränderung des Austrags des Extrusionsmaterials pro Zeit durch die mindestens eine der mindestens zwei Extrusionsöffnungen als auch eine Änderung der Verfahrgeschwindigkeit des Druckkopfes während der Relativbewegung, wobei insbesondere eine Vergrößerung des Austrags des Extrusionsmaterials pro Zeit mit einer Verringerung der Verfahrgeschwindigkeit des Druckkopfes kombiniert werden kann und umgekehrt. Die Erfinder haben erkannt, dass sich auf diese Weise die Dynamik des Systems vergrößern und eine etwaige Latenzzeit der Veränderung des Austrags des Extrusionsmaterials pro Zeit vorteilhaft kompensieren lässt. Auf diese Weise wird ein verbessertes Druckergebnis erreicht. Vorzugsweise werden die Veränderung der Materialförderrate und die Änderung der Verfahrgeschwindigkeit des Druckkopfes zumindest teilweise gleichzeitig durchgeführt.

In dem erfindungsgemäßen Verfahren kann die Änderung der Bewegungsrichtung grundsätzlich schrittweise, d. h. in ein oder mehreren Schritten, und/oder kontinuierlich bzw. annähernd kontinuierlich durchgeführt werden. In erfindungsgemäßen Ausführungsformen bildet das Ende der Relativbewegung in die erste Bewegungsrichtung in Schritt A) gleichzeitig den Anfang der Relativbewegung in die zweite Bewegungsrichtung in Schritt B), d. h. die Relativbewegungen gehen unmittelbar ineinander über. Auf diese Weise führt die Durchführung der Schritte A) und B) dazu, dass mit den Extrusionsöffnungen jeweils eine ununterbrochene bzw. zusammenhängende Materialbahn des Extrusionsmaterials aufgetragen wird, die sich in unterschiedliche Richtungen erstreckt. In gleicher Weise kann die Vergrößerung oder Verringerung des relativen Austrags des Extrusionsmaterials schrittweise und/oder kontinuierlich bzw. annähernd kontinuierlich durchgeführt werden. In bevorzugten Ausführungen ist eine kontinuierliche bzw. annähernd kontinuierliche Änderung der Bewegungsrichtung in Kombination mit einer kontinuierlichen bzw. annähernd kontinuierlichen Vergrößerung oder Verringerung des relativen Materialaustrags des Extrusionsmaterials pro Verfahrstrecke, insbesondere eine kontinuierliche bzw. annähernd kontinuierliche Vergrößerung oder Verringerung des Austrags des Extrusionsmaterials pro Zeit, vorgesehen. Auf diese Weise lässt sich auch ohne eine technisch aufwändige Drehung des Druckkopfes eine effiziente Düsennutzung über ein überraschend breites Spektrum an Bewegungsrichtungen und unter entsprechender Einsparung von Verfahrbewegungen und Prozesszeit erreichen. Durch die Möglichkeit, innerhalb eines Spektrums von Bewegungsrichtungen zu drucken, können außerdem erstmals gekrümmte Konturen mit einem Mehrdüsen-Druckkopf ohne Drehung des Druckkopfes um die eigene Achse hergestellt werden. Eine schrittweise Änderung der Bewegungsrichtung und des relativen Materialaustrags, insbesondere eine schrittweise Vergrößerung oder Verringerung des Austrags des Extrusionsmaterials pro Zeit, ist z. B. für eine effiziente und zeitsparende Erzeugung von Ecken sowie Füll- und/oder Stützstrukturen besonders vorteilhaft.

Die mindestens zwei Extrusionsöffnungen können in direkter Aufeinanderfolge in der Öffnungszeile vorliegen, d. h. zwischen den beiden Extrusionsöffnungen ist keine weitere Extrusionsöffnung in der Öffnungszeile angeordnet. Ein Vorteil dieser Verfahrensausführung ist, dass sich z. B. beim Konturendruck bei simultanem Einsatz der Extrusionsöffnungen und entsprechend hohem Materialdurchsatz ein größerer Bereich von Bewegungsrichtungen bzw. Verfahrwinkeln in der Druckgeometrie erreichen lässt, als bei einem herkömmlich betriebenen 3D-Druckkopf ohne Änderung des Einstellwinkels $\alpha$ möglich ist. Vorzugsweise wird hierbei der relative Materialaustrag, insbesondere der Austrag des Extrusionsmaterials pro Zeit, durch die mindestens eine der mindestens zwei Extrusionsöffnungen in Schritt B) so angepasst, dass die mit den beiden Extrusionsöffnungen parallel zueinander aufgetragenen Materialbahnen zusammen zumindest teilweise eine in Querrichtung zur zweiten Bewegungsrichtung geschlossene Gesamtmaterialbahnoberfläche bilden. Selbstverständlich ist es auch möglich, dass der relative Materialaustrag, insbesondere der Austrag des Extrusionsmaterials pro Zeit, in Schritt A) so angepasst ist, dass die mit den beiden Extrusionsöffnungen parallel zueinander aufgetragenen Materialbahnen zusammen zumindest teilweise eine in Querrichtung zur ersten Bewegungsrichtung geschlossene Gesamtmaterialbahnoberfläche bilden.

Es ist auch möglich, dass zwischen den mindestens zwei Extrusionsöffnungen mindestens eine weitere Extrusionsöffnung in der Öffnungszeile angeordnet ist, durch die kein Austrag von Extrusionsmaterial in Schritt A) und/oder B) erfolgt. Auf diese Weise wird erreicht, dass sich durch den selektiven Austrag aus ausgewählten Extrusionsöffnungen der Bereich möglicher Bewegungsrichtungen in Abhängigkeit vom Einstellwinkel $\alpha$ des Druckkopfes ergänzt. Weiterhin lassen sich für gegebene Bewegungsrichtungen verschiedene Abstände der Materialbahnen realisieren. In Kombination mit der Einstellung der Breite der Materialbahn lässt sich somit z. B. auf einfache und schnelle Weise die Steifigkeit von teilgefüllten Bereichen des Formteils (z. B. Füllstrukturen) gezielt zu steuern.

Selbstverständlich sind auch Kombinationen der vorgenannten Varianten vorgesehen, d. h. in den Verfahrensschritten A) und B) kann der gleichzeitige Austrag des Extrusionsmaterials sowohl durch mindestens zwei Extrusionsöffnungen stattfinden, die in direkter Aufeinanderfolge in der Öffnungszeile vorliegen, als auch durch mindestens zwei Extrusionsöffnungen, zwischen denen mindestens eine weitere Extrusionsöffnung der Öffnungszeile angeordnet ist, durch die kein Austrag des Extrusionsmaterials erfolgt.

Es ist auch möglich, diese Varianten nacheinander durchzuführen, d. h. in ersten Verfahrensschritten A) und B) können die mindestens zwei Extrusionsöffnungen z. B. in direkter Aufeinanderfolge vorliegen, während in zweiten Verfahrensschritten A') und B') zwischen den mindestens zwei Extrusionsöffnungen mindestens eine weitere Extrusionsöffnung der Öffnungszeile vorliegt oder umgekehrt. Auf diese Weise lassen sich z. B. Konturen, Füll- und Stützstrukturen des Formteils besonders effizient erzeugen. Weitere Variationsmöglichkeiten sind für den Fachmann auf der Grundlage dieser Beschreibung ohne Weiteres ersichtlich.

In bevorzugten Verfahrensvarianten wird in Schritt B) mit beiden der mindestens zwei Extrusionsöffnungen in der zweiten Bewegungsrichtung eine breitere oder schmalere Materialbahn des Extrusionsmaterials auf der Druckfläche und/oder einer der darauf angeordneten Schichten aufgetragen als in der ersten Bewegungsrichtung in Schritt A), insbesondere indem in Schritt B) durch beide der mindestens zwei Extrusionsöffnungen ein größeres bzw. kleineres Materialvolumen des Extrusionsmaterials im Verhältnis zur Streckenlänge der durchgeführten Relativbewegung ausgetragen wird als in Schritt A). Dadurch wird erreicht, dass sich die druckbaren Bewegungsrichtungen und Gesamtextrusionsbreiten über einen weiteren Bereich dynamisch variieren lassen, was mit herkömmlich betriebenen Mehrdüsen-Druckköpfen ohne Änderung des Einstellwinkels $\alpha$ kaum oder überhaupt nicht möglich ist.

Grundsätzlich kann der Austrag des Extrusionsmaterials aus den beiden Extrusionsöffnungen in Schritt A) und/oder in Schritt B) sowie ggf. in weiteren Verfahrensschritten gleich oder unterschiedlich sein. In bevorzugten Verfahrensvarianten wird in Schritt A) und/oder in Schritt B) der Austrag des Extrusionsmaterials aus den beiden Extrusionsöffnungen so angepasst, insbesondere durch Anpassung der Materialförderrate, dass die mit den beiden Extrusionsöffnungen auf der Druckfläche und/oder einer der darauf angeordneten Schichten aufgetragenen Materialbahnen des Extrusionsmaterials im Wesentlichen gleich breit sind oder sich in ihrer Bahnbreite um weniger als 10%, weniger als 7%, weniger als 5%, weniger als 3%, weniger als 2% oder weniger als 1% voneinander unterscheiden.

Es versteht sich, dass die Merkmale "mindestens eine Extrusionsöffnung" oder "mindestens zwei Extrusionsöffnungen" auch zwei bzw. mehr als zwei Extrusionsöffnungen mit einschließen. Beispielsweise ist es möglich, dass in den Verfahrensschritten A) und/oder B) ein gleichzeitiger Austrag des Extrusionsmaterials durch mindestens drei, mindestens vier, mindestens fünf, mindestens sechs, mindestens sieben, mindestens acht, mindestens zehn oder mehr Extrusionsöffnungen der Öffnungszeile durchgeführt wird. Entsprechend kann auch in Schritt B) mit mehreren Extrusionsöffnungen der Öffnungszeile in der zweiten Bewegungsrichtung eine breitere oder schmalere Materialbahn des Extrusionsmaterials auf der Druckfläche und/oder einer der darauf angeordneten Schichten aufgetragen werden als in der ersten Bewegungsrichtung in Schritt A), insbesondere indem in Schritt B) durch mehrere Extrusionsöffnungen der Öffnungszeile ein größeres bzw. kleineres Materialvolumen des Extrusionsmaterials im Verhältnis zur Streckenlänge der durchgeführten Relativbewegung ausgetragen wird als in Schritt A), z. B. durch Vergrößerung oder Verringerung des Austrags des Extrusionsmaterials pro Zeit.

In bestimmten Verfahrensvarianten ist weiterhin vorgesehen, dass in Schritt B) der gleichzeitige Austrag des Extrusionsmaterials durch eine kleinere Anzahl von Extrusionsöffnungen der Öffnungszeile als in Schritt A) erfolgt, wobei vorzugsweise in Schritt B) mit einer oder mehreren Extrusionsöffnungen in der zweiten Bewegungsrichtung eine breitere Materialbahn des Extrusionsmaterials auf der Druckfläche und/oder einer der darauf angeordneten Schichten aufgetragen wird als in der ersten Bewegungsrichtung in Schritt A), insbesondere indem in Schritt B) durch eine oder mehrere Extrusionsöffnungen der Öffnungszeile ein größeres Materialvolumen des Extrusionsmaterials im Verhältnis zur Streckenlänge der durchgeführten Relativbewegung ausgetragen wird als in Schritt A), z. B. durch Erhöhung des Austrags des Extrusionsmaterials pro Zeit. Auf diese Weise lassen sich z. B. Füllstrukturen besonders effektiv und gleichzeitig mit einer maßgeschneiderten Steifigkeit erzeugen. Selbstverständlich ist es auch möglich, dass in Schritt B) der gleichzeitige Austrag des Extrusionsmaterials durch eine größere Anzahl von Extrusionsöffnungen der Öffnungszeile als in Schritt A) erfolgt, wobei vorzugsweise in Schritt B) mit einer oder mehreren Extrusionsöffnungen der Öffnungszeile in der zweiten Bewegungsrichtung eine schmalere Materialbahn des Extrusionsmaterials auf der Druckfläche und/oder einer der darauf angeordneten Schichten aufgetragen wird als in der ersten Bewegungsrichtung in Schritt A).

In weiteren Verfahrensvarianten ist vorgesehen dass in den Schritten A) und B) ein gleichzeitiger Austrag des Extrusionsmaterials durch sämtliche Extrusionsöffnungen der Öffnungszeile erfolgt, wobei in Schritt B) mit jeder der Extrusionsöffnungen der Öffnungszeile in der zweiten Bewegungsrichtung jeweils eine breitere Materialbahn des Extrusionsmaterials auf der Druckfläche und/oder einer der darauf angeordneten Schichten aufgetragen wird als in der ersten Bewegungsrichtung in Schritt A), d. h. es wird insbesondere in Schritt B) durch jede Extrusionsöffnung der Öffnungszeile ein größeres bzw. kleineres Materialvolumen des Extrusionsmaterials im Verhältnis zur Streckenlänge der durchgeführten Relativbewegung ausgetragen als in Schritt A), z. B. durch Erhöhung oder Verringerung des Austrags des Extrusionsmaterials pro Zeit. Diese Verfahrensführung gewährleistet eine hohe Ausnutzung der Extrusionsöffnungen des Druckkopfes über ein breites Spektrum von Bewegungsrichtungen, wodurch sich die Prozesszeit gegenüber herkömmlich betriebenen 3D-Druckköpfen deutlich reduzieren lässt.

Die sich linear erstreckende Öffnungszeile kann mindestens drei, mindestens vier, mindestens fünf, mindestens sechs, mindestens sieben, mindestens acht, mindestens neun, mindestens zehn oder mehr als zehn Extrusionsöffnungen umfassen oder aus diesen bestehen. Vorzugsweise besteht die Öffnungszeile aus höchstens oder genau zwölf, höchstens oder genau zehn, höchstens oder genau acht, höchstens oder genau sechs, höchstens oder genau fünf, höchstens oder genau vier, höchstens oder genau drei Extrusionsöffnungen.

In bevorzugten Ausführungen des erfindungsgemäßen Verfahrens ist vorgesehen, dass wenn die zweite Bewegungsrichtung auf die x,y-Achsenebene bezogen in einem betragsmäßig kleineren Verfahrwinkel $\beta$ relativ zum ersten Einstellwinkel $\alpha$ als die erste Bewegungsrichtung verläuft, in der zweiten Bewegungsrichtung eine schmalere Materialbahn des Extrusionsmaterials auf der Druckfläche und/oder einer der darauf angeordneten Schichten aufgetragen wird. Alternativ kann, wenn die zweite Bewegungsrichtung auf die x,y-Achsenebene bezogen in einem betragsmäßig größeren Verfahrwinkel $\beta$ relativ zum ersten Einstellwinkel $\alpha$ als die erste Bewegungsrichtung verläuft, in der zweiten Bewegungsrichtung auch eine breitere Materialbahn des Extrusionsmaterials auf der Druckfläche und/oder einer der darauf angeordneten Schichten aufgetragen werden. Auf diese Weise lassen sich die Extrusionsöffnungen des Druckkopfes mit dem erfindungsgemäßen Verfahren wesentlich effizienter und über ein breiteres Spektrum von Bewegungsrichtungen nutzen, als bei einem herkömmlichen Betrieb des Druckkopfes ohne Änderung des Einstellwinkels $\alpha$ möglich ist. Im Sinne der vorliegenden Erfindung definiert der relative Verfahrwinkel $\beta$ den kleinsten Winkel, der auf die x,y-Achsenebene bezogen zwischen der sich linear erstreckenden Öffnungzeile und der Bewegungsrichtung des Druckkopfes vorliegt.

In weiteren bevorzugten Verfahrensausführungen weist die breitere Materialbahn in Schritt B) eine Bahnbreite auf, die mindestens ein 1,1-faches, mindestens ein 1,2-faches, mindestens ein 1,3-faches, mindestens ein 1,4-faches, mindestens ein 1,5-faches oder mindestens ein 2,0-faches vom Durchmesser der Extrusionsöffnung und/oder von der Bahnbreite der schmaleren Materialbahn beträgt. Die Bahnbreite der breiteren Materialbahn beträgt vorzugsweise höchstens ein 5,0-faches oder höchstens ein 4,0-faches vom Durchmesser der Extrusionsöffnung und/oder von der Bahnbreite der schmaleren Materialbahn. Besonders bevorzugt liegt die Bahnbreite der breiteren Materialbahn in einem Bereich vom 1,1-fachen bis 2,0-fachen vom Durchmesser der Extrusionsöffnung und/oder der Bahnbreite der schmaleren Materialbahn.

Das erfindungsgemäße Verfahren unterliegt hinsichtlich des Extrusionsmaterials keinen besonderen Beschränkungen und eignet sich prinzipiell für sämtliche im Stand der Technik für den 3D-Druck bekannten Werkstoffe wie z. B. Kunst- und Verbundstoffe, Metalle bzw. Metallpulver sowie für keramische Baustoffe, Beton oder organische Materialien wie z. B. Biopolymere, Zellen und Kombinationen davon. Vorzugsweise handelt es sich bei dem Extrusionsmaterial um ein Formwachs oder einen, ggf. faserverstärkten, Thermoplasten wie z. B. Polyethylen (PE), Polypropylen (PP), Polylaktid (PLA), Polyamid (PA), Polyetheretherketon (PEEK), Acrylnitril-Butadien-StyrolCopolymere (ABS), Polystyrol (PS), Polycarbonat (PC), glycerolmodifiziertes Polyethylenterephthalat (PETG), Polymethylmethacrylat (PMMA), Polyvinylalkohol (PVA) oder um einen thermoplastischen Elastomer (TPE). Beliebige Kombinationen dieser Extrusionsmaterialien sind ebenfalls möglich.

Das Extrusionsmaterial kann dem Druckkopf z. B. in Form eines quasi-endlosen Filaments zugeführt werden, das mithilfe einer Temperiereinrichtung im Druckkopf erhitzt und zu einer Schmelze verflüssigt wird. Es ist auch möglich, dass dem Druckkopf das Extrusionsmaterial bereits in Schmelze zugeführt wird, die z. B. aus einem Filament oder auch aus einem Granulat des Extrusionsmaterials erzeugt wird. Entsprechend kann die Vergrößerung bzw. Verringerung des relativen Extrusionsmaterialaustrags pro Verfahrstrecke des Druckkopfes im erfindungsgemäßen Verfahren z. B. über die Steuerung der Materialzufuhr zum Druckkopf, mithilfe von Ventilen oder durch das Vergrößern oder Verkleinern bzw. das Öffnen und Verschließen der Extrusionsöffnungen erfolgen. Beispielsweise können für filamentförmiges Extrusionsmaterial jeweils separate Vorschubeinrichtungen eingesetzt werden, um den Austrag des Extrusionsmaterials durch die Extrusionsöffnungen der Öffnungszeile z. B. über die Vorschubgeschwindigkeit individuell zu steuern. Extrusionsmaterial, das dem Druckkopf bereits in Schmelze zugeführt wird, kann z. B. mithilfe einer Verteilereinrichtung gleichmäßig oder individuell auf die Extrusionsöffnungen der Öffnungszeile verteilt werden. Bei gleichmäßiger Verteilung kann der Austrag des Extrusionsmaterials durch die einzelnen Extrusionsöffnungen z. B. mithilfe von Ventilen individuell angepasst werden. Weitere geeignete Möglichkeiten kann der Fachmann auf Basis der vorliegenden Beschreibung ohne Weiteres bestimmen.

In besonders bevorzugten Ausführungen ist der Druckkopf gemäß dem nachfolgenden vierten und/oder fünften Aspekt der Erfindung ausgebildet.

Ein zweiter Aspekt der vorliegenden Offenbarung betrifft ein computerimplementiertes Verfahren zur Steuerung der Herstellung eines dreidimensionalen Formteils.

Das Verfahren geht analog zum ersten Aspekt davon aus, dass zur Herstellung des dreidimensionalen Formteils mit einem Druckkopf ein Extrusionsmaterial in mehreren, entlang einer z-Achse übereinander angeordneten Schichten auf eine Druckfläche aufgetragen und während des Auftragens zwischen dem Druckkopf und der Druckfläche Relativbewegungen in einer x-Achse und/oder einer y-Achse einer sich senkrecht zur z-Achse erstreckenden x,y-Achsenebene durchgeführt werden. Der Druckkopf weist wiederum auf einer der Druckfläche zugewandten Ausgabeseite mindestens eine sich linear erstreckende Öffnungszeile mit mindestens zwei Extrusionsöffnungen zum Austragen des Extrusionsmaterials auf, wobei der Druckkopf bezogen auf die Öffnungszeile in einem Einstellwinkel $\alpha$ in der x,y-Achsenebene ausgerichtet ist.

Das computerimplementierte Verfahren umfasst die folgenden Schritte: a) Empfangen eines digitalen Modells des dreidimensionalen Formteils, b) Virtuelles Anordnen des digitalen Modells auf der Druckfläche, c) Ermitteln einer Druckaufgabe zum schichtweisen Auftragen von zumindest einem Teil des Formteils auf der Druckfläche mit dem Druckkopf in dem Einstellwinkel $\alpha$ anhand des gemäß Schritt b) angeordneten digitalen Modells, d) Erzeugen eines Druckauftrag als Programmcode mit Programmcodemitteln zum Ausführen der Druckaufgabe mithilfe einer computerbasierten Steuerungseinrichtung. Analog zum ersten Erfindungsaspekt geht auch das computerimplementierte Verfahren vorzugsweise davon aus, dass der Einstellwinkel $\alpha$ während der Ausführung der Druckaufgabe unverändert beibehalten wird, d. h. konstant ist. Insbesondere kann das Verfahren daher auch ein Empfangen einer Angabe des Einstellwinkels $\alpha$ umfassen.

Das computerimplementierte Verfahren der vorliegenden Offenbarung charakterisiert, dass in Schritt b) ein automatisiertes Definieren der z-Achse des Formteils, in der die Schichten auf der Druckfläche übereinander angeordnet werden, und/oder ein automatisiertes Definieren eines Rotationswinkels des Formteils um die z-Achse, der das Formteil in der x,y-Achsenebene ausrichtet, durchgeführt wird. Klarstellend liegt ein automatisiertes Definieren der z-Achse des Formteils und/oder ein automatisiertes Definieren des Rotationswinkels des Formteils um die z-Achse vor, wenn Schritt b) jeweils mindestens eine durch einen Computer bestimmte Veränderung der z-Achse und/oder des Rotationswinkels um die z-Achse des in Schritt a) empfangenen digitalen Modells des dreidimensionalen Formteils umfasst.

In herkömmlichen gattungsgemäßen Verfahren erfolgt die virtuelle Anordnung des digitalen Modells üblicherweise durch den Nutzer. Insoweit im Stand der Technik überhaupt eine computergestützte Anordnung stattfindet, ist diese in der Regel auf eine platzsparende Anordnung mehrerer Formteile auf der Druckfläche beschränkt. Das computerimplementierte Verfahren der vorliegenden Offenbarung verbindet dagegen erstmals den spezifischen Einstellwinkel $\alpha$ eines Mehrdüsen-Druckkopfes mit einer computergestützten Bestimmung der z-Achse des herzustellenden Formteils und dessen Orientierung in der x,y-Achsenebene. Durch diese Kombination erreichen die Erfinder eine vorteilhafte Erhöhung der Freiheit des Systems, durch die sich der vermeintliche Nachteil, der aus fachmännischer Sicht durch den fehlenden Rotationsfreiheitsgrad des Druckkopfes entsteht, zumindest teilweise kompensieren lässt. Auf diese Weise wird eine prozessoptimierende Anordnung des zu erzeugenden Formteils im Druckraum erzielt, indem das Formteil vorab so ausgerichtet wird, dass in möglichst großen Bereichen mehrere Extrusionsöffnungen simultan betrieben werden können. Die computergestützte Bestimmung dieses Freiheitsgrades gewährleistet eine deutliche Verkürzung der Prozesszeit gegenüber konventionellen Verfahren ohne automatisierte Anordnung des Formteils im virtuellen Druckraum.

Das automatisierte Definieren der z-Achse des Formteils und/oder des Rotationswinkels des Formteils um die z-Achse erfolgt vorzugsweise iterativ, wobei eine Mehrzahl von möglichen z-Achsen des Formteils bzw. eine Mehrzahl von möglichen Rotationswinkeln des Formteils um die z-Achse bestimmt und jeweils mithilfe einer Gütefunktion bewertet werden. Die automatisierte Definition der z-Achse des Formteils und/oder des Rotationswinkels des Formteils um die z-Achse kann dann anhand derjenigen z-Achse bzw. desjenigen Rotationswinkels erfolgen, die oder der durch die Gütefunktion am besten bewertet wurde. Die Gütefunktion kann z. B. ein Gütekriterium oder mehrere Gütekriterien für das schichtweise Auftragen von zumindest einem Teil des Formteils auf der Druckfläche mit dem Druckkopf in dem Einstellwinkel $\alpha$ des Druckkopfes berücksichtigen.

In bevorzugten Verfahrensvarianten umfasst das automatisierte Definieren der z-Achse des Formteils einen oder mehrere der folgenden Schritte: b1) Anordnen des digitalen Modells auf der Druckfläche in einer ersten z-Achsenausrichtung, b2) Bilden einer ersten Projektionsfläche durch projizieren eines Oberflächenabschnittes oder mehrerer Oberflächenabschnitte des Formteils in der ersten z-Achsenausrichtung auf die x,y-Achsenebene und Ermitteln eines ersten Projektionsflächeninhaltes, b3) Anordnen des digitalen Modells auf der Druckfläche in mindestens einer zweiten z-Achsenausrichtung, b4) Bilden mindestens einer zweiten Projektionsfläche durch projizieren eines Oberflächenabschnittes oder mehrerer Oberflächenabschnitte des Formteils in der zweiten z-Achsenausrichtung auf die x,y-Achsenebene und Ermitteln eines zweiten Projektionsflächeninhaltes, b5) Definieren der z-Achse des Formteils anhand bzw. in Form der z-Achsenausrichtung, für die der größere Projektionsflächeninhalt ermittelt wurde.

Die Projektion des Oberflächenabschnitts oder der Oberflächenabschnitte auf die x,y-Achsenebene erfolgt in den Schritten b2) und/oder b4) vorzugsweise im Wesentlichen parallel zur z-Achse. Vorzugsweise wird in den Schritten b2) und/oder b4) eine Summe aus den Projektionsflächeninhalten mehrerer Oberflächenabschnitte des Formteils ermittelt. Es ist natürlich auch möglich, in den Schritten b2) und/oder b4) die Projektionsflächeninhalte sämtlicher von der Oberfläche des Formteils umfassten Oberflächenabschnitte zu ermitteln, d. h. es wird jeweils zumindest ein Teil der Oberfläche des Formteils oder die gesamte Oberfläche des Formteils auf die x,y-Achsenebene projiziert und der Projektionsflächeninhalt ermittelt. Auf diese Weise lässt sich die für die Herstellung des Formteils günstigste z-Achsenausrichtung besonders zuverlässig bestimmen.

In weiteren bevorzugten Verfahrensvarianten umfasst das automatisierte Definieren des Rotationswinkels des Formteils um die z-Achse einen oder mehrere der folgenden Schritte: b6) Bestimmen von Oberflächenelementen des Formteils, die jeweils eine nicht-parallel zur z-Achse ausgerichtete Flächennormale aufweisen, sodass eine Projektion der Flächennormale auf die x,y-Achsenebene und die sich linear erstreckende Öffnungszeile des Druckkopfes zwischen sich einen in der x,y-Achsenebene liegenden Einschlusswinkel definieren, b7) Projizieren der Flächennormalen in einem ersten Rotationswinkel des Formteils auf die x,y-Achsenebene und betragsmäßiges Bestimmen der Einschlusswinkel, die in dem ersten Rotationswinkel jeweils zwischen der Projektion der Flächennormalen auf die x,y-Achsenebene und der sich linear erstreckenden Öffnungszeile des Druckkopfes vorliegen, b8) Projizieren der Flächennormalen in mindestens einem zweiten Rotationswinkel des Formteils auf die x,y-Achsenebene und betragsmäßiges Bestimmen der Einschlusswinkel, die in dem zweiten Rotationswinkel jeweils zwischen der Projektion der Flächennormalen auf die x,y-Achsenebene und der sich linear erstreckenden Öffnungszeile des Druckkopfes vorliegen, b9) Definieren des Rotationswinkels des Formteils um die z-Achse anhand bzw. in Form derjenigen Orientierung, in der bei einem zahlenmäßig und/oder flächenmäßig größeren Anteil der Oberflächenelemente der Einschlusswinkel zwischen der Projektion der Flächennormalen und der sich linear erstreckenden Öffnungszeile des Druckkopfes betragsmäßig in einem Bereich von 0° bis 85° liegt. Ein Einschlusswinkel von 0° bedeutet, dass sich das betreffende Oberflächenelement in Bezug auf die Öffnungszeile des Druckkopfes in einem relativen Verfahrwinkel β von 90° erstreckt. Ein Einschlusswinkel von 85° bedeutet, dass sich das betreffende Oberflächenelement in Bezug auf die Öffnungszeile des Druckkopfes in einem relativen Verfahrwinkel β von 5° erstreckt.

In bevorzugten Ausführungsformen liegt bei dem zahlenmäßig und/oder flächenmäßig größeren Anteil der Oberflächenelemente der Einschlusswinkel zwischen der Projektion der Flächennormalen und der sich linear erstreckenden Öffnungszeile im Bereich von 45° bis 85°, im Bereich von 55° bis 85°, im Bereich von 65° bis 85° oder im Bereich von 75° bis 85°.

Die Erfinder haben erkannt, dass sich die Orientierung derjenigen Oberflächenbereiche des Formteils, die nicht parallel zu der x,y-Achsenebene liegen und somit im Wesentlichen die Konturen der einzelnen Schichten des Formteils bestimmen, in konventionellen 3D-Druckverfahren ohne Drehung des Druckkopfes in der Regel limitierend auf die parallele Einsetzbarkeit der Extrusionsöffnungen auswirkt. Dieses Problem wird hier erfindungsgemäß gelöst, indem der Anteil solcher konturbestimmender Oberflächenbereiche gering gehalten wird, die nahezu parallel zur sich linear erstreckenden Öffnungszeile des Druckkopfes ausgerichtet sind. In diesen Oberflächenbereichen ist die Parallelextrusion kaum oder gar nicht möglich, da sich die einzelnen Materialbahnen überdecken würden. Auf die erfindungsgemäße Weise wird schon bei einfachen Formteilgeometrien eine aus fachmännischer Sicht überraschende Beschleunigung des 3D-Druckverfahrens erreicht. Diesbezüglich wird auch auf die nachfolgenden Ausführungsbeispiele verwiesen.

In anderen bevorzugten Ausführungen liegt bei dem zahlenmäßig und/oder flächenmäßig größeren Anteil der Oberflächenelemente der Einschlusswinkel zwischen der Projektion der Flächennormalen und der sich linear erstreckenden Öffnungszeile im Bereich von 35° bis 55°. Diese Bereiche des Einschlusswinkels haben sich für eine zeitsparende Erzeugung von teilgefüllten Formteilbereichen (z. B. Innen- und Stützbereiche) als besonders vorteilhaft erwiesen.

In weiteren Ausführungen ist es vorgesehen, der Definition des Rotationswinkels mehrere, insbesondere voneinander getrennte, Bereiche des Einschlusswinkels zugrunde zu legen. Beispielsweise kann der Rotationswinkel um die z-Achse anhand derjenigen Orientierung definiert werden, in der bei einem zahlenmäßig und/oder flächenmäßig größeren Anteil der Oberflächenelemente der Einschlusswinkel zwischen der Projektion der Flächennormalen und der sich linear erstreckenden Öffnungszeile des Druckkopfes betragsmäßig in einem Bereich von 65° bis 85°, 5° bis 25° und/oder 35° bis 55° liegt. Auf diese Weise lässt sich die Orientierung des Formteils in der x,y-Achsenebene besonders vorteilhaft mit der Druckkopf- und Formteilgeometrie abstimmen und die Prozesszeit zusätzlich reduzieren.

Vorzugsweise erfolgt die Definition des Rotationswinkels in Schritt b9) anhand des flächenmäßig größeren Anteils der Oberflächenelemente. Der flächenmäßige Anteil kann hierbei grundsätzlich ungewichtet oder gewichtet sein. Vorzugsweise enthält der flächenmäßige Anteil eine Gewichtung des Flächeninhaltes der Oberflächenelemente anhand ihres Neigungswinkels relativ zur x,y-Achsenebene. Beispielsweise kann der flächenmäßige Anteil in Schritt b9) ermittelt werden, indem für die Oberflächenelemente jeweils ein Normalenwinkel $\vartheta'$, der zwischen der Flächennormalen und der z-Achse definiert ist, bestimmt und anschließend jeweils ein Produkt aus dem Flächeninhalt und dem Sinus des Normalenwinkels $\vartheta$ der Oberflächenelemente gebildet wird. Durch Summieren der gebildeten Produkte wird der gewichtete flächenmäßige Anteil der Oberflächenelemente ermittelt. Dadurch wird gewährleistet, dass Oberflächenbereiche des Formteils, die z. B. eher senkrecht zur x,y-Achsenebene ausgerichtet sind, bei der automatisierten Ausrichtung des Formteils eine stärkere Berücksichtigung finden als Oberflächenbereiche, die z. B. eher parallel zur x,y-Achsenebene ausgerichtet sind. Auf diese Weise werden die Ausrichtung des Formteils und der Öffnungszeile in der x,y-Achsenebene besonders vorteilhaft aufeinander abgestimmt und eine besonders effektive Verkürzung der Prozesszeit erreicht.

Alternativ oder zusätzlich kann das automatisierte Definieren des Rotationswinkels des Formteils um die z-Achse auch einen oder mehrere der folgenden Schritte umfassen: b10) Virtuelles Anordnen des digitalen Modells auf der Druckfläche und Bestimmen von mindestens einem Schnitt oder mehreren Schnitten durch das Formteil parallel zur x,y-Achsenebene und/oder von mindestens einem Oberflächenabschnitt des Formteils, b11) Orientieren des Formteils in mindestens zwei verschiedenen Rotationswinkeln um die z-Achse und Bewerten der jeweiligen Orientierung mit einer Gütefunktion, die mindestens ein Gütekriterium für das Auftragen von zumindest einem Teilabschnitt des Schnitts und/oder des Oberflächenabschnitts mit dem Einstellwinkel α des Druckkopfes in dem jeweiligen Rotationswinkel berücksichtigt, b12) Definieren des Rotationswinkels um die z-Achse anhand derjenigen Orientierung, die hinsichtlich der Gütefunktion am besten bewertet wurde.

Die Erfinder haben erkannt, dass die Ausrichtung des Formteils in der x,y-Achsenebene bei einem 3D-Druckverfahren mit einem Mehrdüsen-Druckkopf ohne eigene Rotationsachse, d. h. einem rotationsfixem Druckkopf, eine Schlüsselbedeutung hat. Die Rotation des Formteils um die z-Achse bestimmt die Orientierung seiner Oberflächen, die wiederum die für den Druck entlang bzw. parallel zu der Kontur einer Schicht erforderlichen Relativbewegungen des Druckkopfes festlegen. In Abhängigkeit der Anordnung der Extrusionsöffnungen und des Einstellwinkels α ist der Druckkopf für Relativbewegungen in unterschiedliche Richtungen unterschiedlich gut geeignet.

Jeder Schnitt kann mehrere Teilabschnitte umfassen, die sich jeweils in eine unterschiedliche Richtung und/oder mit einer unterschiedlichen Länge entlang einer Kontur des Schnitts erstrecken. Vorzugsweise wird das Gütekriterium für mehrere Teilabschnitte, insbesondere für mehrere oder jeden der Teilabschnitte, aus denen die Kontur besteht, berücksichtigt.

Geeignete Gütekriterien lassen sich für einen, mehrere oder sämtliche Teilabschnitte einer oder mehrerer Schichten des Formteils oder für einen Wechsel von einem Teilabschnitt auf den verbundenen darauffolgenden Teilabschnitt, der insbesondere einen Richtungswechsel der Relativbewegung des Druckkopfes beinhalten kann, aufstellen.

Geeignete Gütekriterien lassen sich ebenfalls für einen, mehrere oder sämtliche Oberflächenabschnitte des Formteils oder für einen Wechsel zwischen aneinander angrenzenden Oberflächenabschnitten, der insbesondere einen Richtungswechsel der Relativbewegung des Druckkopfes beinhalten kann, aufstellen, wobei die Oberflächenabschnitte unterschiedliche Flächeninhalte aufweisen können. Die Bewegungsrichtung der Relativbewegung des Druckkopfes beim Auftragen eines Oberflächenabschnitts oder eines Teils davon kann z. B. für diejenigen Oberflächenabschnitte bestimmt werden, die jeweils eine nicht-parallel zur z-Achse ausgerichtete Flächennormale aufweisen, d. h. die nicht horizontal in der x,y-Achsenebene angeordnet sind, wobei sich die Bewegungsrichtung der Relativbewegung des Druckkopfes im Herstellungsprozess des Oberflächenabschnitts senkrecht zur Projektion der Flächennormale auf die x,y-Achsenebene erstreckt.

Gütekriterien, die auf Teilabschnitte aufgestellt werden, werden mit Vorteil anhand der Länge des jeweiligen Teilabschnitts gewichtet. Gütekriterien, die am Wechsel bzw. Richtungswechsel von einem Teilabschnitt auf den darauffolgenden aufgestellt werden, werden mit Vorteil über den Betrag bzw. Winkel der Richtungsänderung der Teilabschnitte bzw. der Richtungsänderung der Relativbewegung des Druckkopfes und/oder anhand der Längen der jeweiligen Teilabschnitte gewichtet.

Gütekriterien, die für Oberflächenabschnitte des Formteils aufgestellt werden, werden mit Vorteil anhand des Flächeninhaltes des jeweiligen Oberflächenabschnitts gewichtet. Gütekriterien, die am Wechsel bzw. Richtungswechsel von einem Oberflächenabschnitt auf den darauffolgenden aufgestellt werden, werden mit Vorteil über den Betrag bzw. Winkel der Richtungsänderung der Oberflächenabschnitte bzw. der Richtungsänderung der Relativbewegung des Druckkopfes bezogen auf die x,y-Achsenebene gewichtet. Es ist auch möglich, die Gütekriterien anhand der Orientierung der Flächennormalen der Oberflächenabschnitte, insbesondere den zwischen den Flächennormalen und der z-Achse eingeschlossenen Winkeln, zu wichten. Ferner ist es möglich, die Gütekriterien anhand der Länge einer gemeinsamen Kante von benachbarten Oberflächenabschnitten zu wichten.

Es versteht sich, dass auch beliebige Kombinationen der vorgenannten Wichtungen möglich sind.

Ein bevorzugtes Gütekriterium beinhaltet als Bewertungsparameter die Anzahl und/oder Gesamtlänge der Relativbewegungen des Druckkopfes, die für eine Erzeugung des Teilabschnitts bzw. der Teilabschnitte des Schnitts oder des Oberflächenabschnitts bzw. der Oberflächenabschnitte erforderlich ist. Beispielsweise kann die Gütefunktion eine mit der Anzahl und/oder Gesamtlänge der Relativbewegungen steigende Bestrafung enthalten. Denn wenn die Anordnung der Extrusionsöffnungen des Druckkopfes den parallelen Betrieb mehrerer Extrusionsöffnungen nur in Bewegungsrichtungen innerhalb eines beschränkten Winkelbereichs erlaubt, kann in einer gegebenen Orientierung des Formteils in der x,y-Achsenebene gegebenenfalls nicht jeder Teilabschnitt des Schnitts bzw. Oberflächenabschnitts durch simultane Extrusion aus mehreren Extrusionsöffnungen erzeugt werden. Die parallelen Materialbahnen müssen in diesen Teilabschnitten dann einzeln und nacheinander erzeugt werden. Die Gesamtlänge der dafür erforderlichen Relativbewegungen des Druckkopfes beträgt in diesem Teilabschnitt dann ein Vielfaches der Länge des Teilabschnitts, während die Gesamtlänge bei der simultanen Extrusion im Idealfall der einfachen Länge des Teilabschnitts entspricht. Die Anzahl der Relativbewegungen pro Teilabschnitt beschreibt somit die Güte der Orientierung des Formteils in der x,y-Achsenebene für einen bestimmten Einstellwinkel $\alpha$ des Druckkopfes. Die Güte der Orientierung des Formteils in der x,y-Achsenebene kann außerdem in diesem Fall sinnvoll über die Gesamtlänge der erforderlichen Relativbewegungen zur Erzeugung der Materialbahnen einer oder mehrerer Schichten bewertet werden.

Als weiteres Gütekriterium kann für einen Teilabschnitt die in einer Relativbewegung des Druckkopfes im Einstellwinkel $\alpha$ mit den Extrusionsöffnungen in Querrichtung zur Bewegungsrichtung erzeugbare geschlossene Gesamtmaterialbahnoberfläche, d. h. die maximale Breite der durch die Extrusionsöffnungen erzeugbaren geschlossenen Oberfläche quer zur Bewegungsrichtung der Relativbewegung, in Differenz bzw. ins Verhältnis zu einer vorgegebenen minimalen Gesamtbreite, auch Sollbreite genannt, des Extrusionsmaterials in dem Teilabschnitt gesetzt werden. Je kleiner das Verhältnis ist, desto größer kann die Bestrafung ausfallen. Auf diese Weise wird die Güte der Formteilausrichtung dadurch bewertet, welcher Anteil der in einem Teilabschnitt gewünschten bzw. vorgegebenen minimalen Gesamtbreite beim einmaligen Befahren des Teilabschnitts hergestellt werden kann.

Ein weiteres bevorzugtes Gütekriterium beinhaltet als Bewertungsparameter den Anteil des Teilabschnitts oder der Teilabschnitte, der durch paralleles Austragen des Extrusionsmaterials aus den Extrusionsöffnungen mit einer Bahnbreite, die größer ist als der Öffnungsdurchmesser der Extrusionsöffnungen, erzeugbar ist. Der Arbeitspunkt des Druckkopfes wird bestimmt durch die relative Position der aktiven Extrusionsöffnungen zueinander und der für die simultane Extrusion paralleler, quer zur Relativbewegung geschlossener Materialbahnen benötigten Bahnbreite. Vorteilhaft für die Genauigkeit der Berandung einer Materialbahn ist dabei eine relative Bahnbreite bezogen auf den Öffnungsdurchmesser von größer gleich eins. Mit steigender relativer Extrusionsbreite nimmt die Genauigkeit der Berandung ab.

Ein weiteres bevorzugtes Gütekriterium beinhaltet als Bewertungsparameter den Abstand der Extrusionsöffnungen zueinander senkrecht zur Bewegungsrichtung der Relativbewegung während des Austragens des Extrusionsmaterials in mindestens einem Teilabschnitt. Die Lage der aktiven Extrusionsöffnungen zueinander in Bewegungsrichtung und senkrecht dazu beeinflusst das Extrusionsverhalten. Alle in Bewegungsrichtung vor ihren benachbarten Extrusionsöffnungen positionierten Extrusionsöffnungen erzeugen Materialbahnen frei. Dabei liegen diese Extrusionsöffnungen mittig über der Materialbahnbreite. Alle weiteren Extrusionsöffnungen extrudieren neben oder zwischen bereits bestehenden Materialbahnen. In Abhängigkeit der Positionen der Extrusionsöffnungen und der Materialbahnbreiten können sich dabei auch Situationen ergeben, in denen erzeugte Materialbahnen durch bereits bestehende Materialbahnen zu einem seitlichen Versatz gezwungen werden. Die betroffenen Materialbahnen liegen dann nicht mehr mittig unter ihren Extrusionsöffnungen, was zu einer reduzierten Genauigkeit der Berandung und/oder der Auffüllung der erzeugten Gesamtmaterialbahn führen kann. Dies kann beispielsweise vorkommen beim Übergang der Nutzung einer Öffnungszeile zur Nutzung einer zweiten Öffnungszeile. Die Eignung eines Arbeitspunktes kann daher vorteilhaft bewertet werden, indem der Abstand der genutzten Extrusionsöffnungen senkrecht zur Fahrtrichtung des Druckkopfes bewertet wird. Gleiche Abstände sind vorteilhaft, ungleiche Abstände sind nachteilig, d. h. die Gütefunktion kann z. B. eine Bestrafung von ungleichen Abständen der Extrusionsöffnungen zueinander senkrecht zur Bewegungsrichtung der Relativbewegung enthalten.

Gütekriterien lassen sich auch für einen Wechsel zwischen zusammenhängenden Teilabschnitten einer oder mehrerer Schichten bzw. Oberflächenabschnitten des Formteils aufstellen. Grundsätzlich als gut zu bewerten sind geringe Veränderungen des Arbeitspunktes beim Wechsel zwischen zwei Teilabschnitten wie z. B. die Verwendung derselben Kombination von aktiven Extrusionsöffnungen und/oder derselben Materialbahnbreiten in zwei zusammenhängenden Teilabschnitten.

Ein bevorzugtes Gütekriterium beinhaltet als Bewertungsparameter die Anzahl der Extrusionsöffnungen, durch die bei der Relativbewegung entlang zusammenhängender Teilabschnitte das Extrusionsmaterial ununterbrochen ausgetragen werden kann. Werden auf zwei benachbarten Teilabschnitten unterschiedliche Kombinationen von Extrusionsöffnungen zum Austragen des Extrusionsmaterials eingesetzt, ist es von Vorteil, wenn möglichst viele der eingesetzten Extrusionsöffnungen Bestandteil beider Kombinationen sind. Es werden dann weniger Starts und Stopps der Materialextrusion benötigt. Ein Maß für die Eignung kann beispielsweise das Verhältnis von auf beiden Teilabschnitten aktiven Extrusionsöffnungen zu den übrigen Extrusionsöffnungen der eingesetzten Öffnungszeilen sein.

Ein weiteres bevorzugtes Gütekriterium beinhaltet als Bewertungsparameter die Differenz und/oder das Verhältnis zwischen unterschiedlichen Bahnbreiten des Extrusionsmaterials, die mit mindestens einer der Extrusionsöffnungen in zwei zusammenhängenden Teilabschnitten erzeugt werden. Um die Dynamik des geforderten Materialaustrags pro Zeit gering zu halten, ist es vorteilhaft, wenn in zwei benachbarten Teilabschnitten die zur Austragung des Extrusionsmaterials benutzten Extrusionsöffnungen geringe Unterschiede in der erzeugten Materialbahnbreite in beiden Teilabschnitten aufweisen. Es werden dann geringere Anfangsabweichungen von den Sollbreiten des Extrusionsmaterials, die entlang des Teilabschnitts vorgegeben sind, erreicht bzw. weniger Kompensation über die Verfahrgeschwindigkeit des Druckkopfes benötigt. Insofern kann die Gütefunktion eine Bestrafung großer Differenzen und/oder Verhältnisse enthalten.

Schließlich beinhaltet ein weiteres bevorzugtes Gütekriterium als Bewertungsparameter die Anzahl von Ereignissen, in denen nach einem Stoppen des Austrags des Extrusionsmaterials aus einer der Extrusionsöffnungen während der Relativbewegung des Druckkopfes diese Extrusionsöffnung durch die Relativbewegung über einen Außenrand der Schicht und/oder des Formteils hinaus bewegt wird. Bei nicht vollständig kontrollierbarer Extrusionssteuerung kann der Materialaustrag nicht spontan komplett gestoppt werden. Im Hinblick auf die erzeugte Oberflächenqualität ist es dann vorteilhaft, wenn Extrusionsöffnungen nicht zeitnah nach dem Stoppen des Materialaustrags über die Bauteilkontur hinaus fahren. Vorteilhaft ist die Auswahl derjenigen Ausrichtungen des Formteils, in der sich diese Situationen selten ergeben.

Selbstverständlich sind auch beliebige Kombinationen aus den vorgenannten Gütekriterien bzw. Bewertungsparametern möglich. Sofern nicht anders angegeben, kann sich der Begriff "Teilabschnitt" in diesem Zusammenhang sowohl auf einen Teil eines Schnitts als auch auf einen Teil eines Oberflächenabschnitts beziehen.

Es ist möglich, im Schritt b10) mehrere ausgewählte Schnitte durch das Formteil zu bestimmen, von denen jeder Schnitt jeweils repräsentativ für eine Anzahl weiterer Schnitte durch das Formteil ist, z. B. weil der Schnitt mehrmals in identischer oder zumindest annähernd identischer Form im Formteil vorkommt. In diesem Fall kann in Schritt b12) eine Gewichtung der Streckenlänge anhand der Anzahl der Schnitte erfolgen, für die der jeweilige Schnitt repräsentativ ist.

In bevorzugten Verfahrensvarianten werden die beiden Verfahren zur Definition des Rotationswinkel des Formteils um die z-Achse kombiniert, wobei z. B. zunächst eine Definition des Rotationswinkels anhand eines oder mehrerer der Schritte b6) bis b9) durchgeführt wird und anschließend eine Definition des Rotationswinkel anhand eines oder mehrerer der Schritte b10) bis b12). In Zusammenwirkung beider Verfahren lässt sich eine besonders akkurate Feinjustierung der Formteilorientierung erreichen, die in einer zusätzlichen Reduzierung der Prozesszeit resultieren kann.

Erfindungsgemäß sind die Programmcodemittel dazu eingerichtet, die Druckaufgabe gemäß dem Verfahren des ersten Erfindungsaspektes auszuführen. Durch die Zusammenführung beider Verfahren ergeben sich Synergieeffekte, durch die sich überraschend große Zeitvorteile in Bezug auf die für die Herstellung des Formteils erforderliche Prozesszeit erzielen lassen.

In besonders bevorzugten Ausführungen geht das computerimplementierte Verfahren zudem davon aus, dass der Druckkopf gemäß dem nachfolgenden vierten oder fünften Aspekt der Erfindung ausgebildet ist.

Ein dritter Aspekt der Offenbarung betrifft ein computerlesbares Speichermedium mit einem Computerprogramm, das bei der Ausführung durch eine computerbasierte Steuerungseinrichtung diese veranlasst, dass computerimplementierte Verfahren des zweiten Aspektes auszuführen.

Gemäß einem vierten Aspekt der Offenbarung wird ein Druckkopf zur Herstellung eines dreidimensionalen Formteils bereitgestellt. Der Druckkopf weist gattungsgemäß eine Mehrzahl von Extrusionsöffnungen zum Austragen eines Extrusionsmaterials auf, wobei eine direkte Aufeinanderfolge von mindestens einer ersten, einer zweiten und einer dritten Extrusionsöffnung auf einer Ausgabeseite des Druckkopfes in einer sich linear erstreckenden Öffnungszeile angeordnet sind bzw. eine sich linear erstreckende Öffnungszeile bilden. Eine direkte Aufeinanderfolge im Sinne der Offenbarung liegt vor, wenn in der sich linear erstreckenden Öffnungszeile zwischen der ersten und der zweiten Extrusionsöffnung und zwischen der zweiten und der dritten Extrusionsöffnung keine weitere Extrusionsöffnung angeordnet ist, d. h. die erste und die zweite Extrusionsöffnung und die zweite und die dritte Extrusionsöffnung folgen jeweils unmittelbar aufeinander.

Der Druckkopf ist dadurch charakterisiert, dass die erste und die zweite Extrusionsöffnung zusammen mit einer weiteren vierten Extrusionsöffnung eine erste Dreiecksformation und die zweite und die dritte Extrusionsöffnung zusammen mit einer weiteren fünften Extrusionsöffnung eine zweite Dreiecksformation bilden, wobei jeweils die erste, zweite und vierte Extrusionsöffnung der ersten Dreiecksformation und jeweils die zweite, dritte und fünfte Extrusionsöffnung der zweiten Dreiecksformation im Wesentlichen im gleichen Abstand voneinander angeordnet sind bzw. sich in ihrem Abstand um höchstens 10%, höchstens 7%, höchstens 5%, höchstens 3%, höchstens 2% oder höchstens 1% voneinander unterscheiden.

In der Anordnung bilden die Extrusionsöffnungen auf der Ausgabeseite des Druckkopfes zusammen die Eckpunkte von mindestens zwei im Wesentlichen gleichseitigen Dreiecken. Auf diese Weise erreichen die Erfinder, dass sich die Einsatzbereiche der Extrusionsöffnungen in verschiedenen Kombinationen vorteilhaft komplementieren, sodass mit dem Druckkopf in einem breiten Spektrum von Bewegungsrichtungen gedruckt werden kann, ohne dass es hierfür einer technisch aufwändigen Drehung des Druckkopfes bedarf. Auf diese Weise löst der erfindungsgemäße Druckkopf das Problem, eine Reduzierung der Prozesszeit im 3D-Druck bei gleichzeitig vereinfachtem und kostengünstigem Aufbau der 3D-Druckvorrichtung zu erreichen. Diesbezüglich wird auch auf die nachfolgenden Ausführungsbeispiele verwiesen.

In einer Ausführungsform sind die vierte Extrusionsöffnung und die fünfte Extrusionsöffnung auf gegenüberliegenden Seiten der Öffnungszeile angeordnet. Dadurch wird durch die vierte, zweite und fünfte Extrusionsöffnung eine zusätzliche Öffnungszeile gebildet, die den Einsatzbereich der ersten Öffnungszeile komplementiert. Damit wird der Verfahrwinkelbereich des Druckkopfes erweitert, ohne dass es einer Drehung des Druckkopfes bedarf. Dies ist insbesondere vorteilhaft, um mit einer begrenzten Anzahl von Extrusionsöffnungen komplexe Druckaufgaben mit wenigen Verfahrbewegungen des Druckkopfes und in kurzer Zeit zu erledigen. Beispielsweise können die vierte und fünfte Extrusionsöffnung in Bewegungsrichtungen, die auf die sich linear erstreckende Öffnungszeile bezogen in einem Winkel von etwa 60° bis etwa 120° verlaufen, zum Füllen der Zwischenräume zwischen der ersten, zweiten und dritten Extrusionsöffnung genutzt werden. Das ist insbesondere bei großen Öffnungsabständen von Vorteil.

In einer anderen Ausführungsform sind die vierte Extrusionsöffnung und die fünfte Extrusionsöffnung auf derselben Seite der Öffnungszeile angeordnet.

Gemäß einer Weiterbildung dieser Ausführungsform bilden die vierte und die fünfte Extrusionsöffnung zusammen mit einer weiteren sechsten Extrusionsöffnung eine dritte Dreiecksformation, wobei die vierte, fünfte und sechste Extrusionsöffnung der dritten Dreiecksformation im gleichen Abstand voneinander angeordnet sind oder sich in ihrem Abstand um höchstens 10%, höchstens 7%, höchstens 5%, höchstens 3%, höchstens 2% oder höchstens 1% voneinander unterscheiden. Die sechste Extrusionsöffnung ist auf derjenigen Seite der vierten und fünften Extrusionsöffnung angeordnet, die der Öffnungszeile gegenüberliegt.

In einer anderen Weiterbildung sind eine weitere sechste und siebte Extrusionsöffnung auf einer Seite der Öffnungszeile angeordnet, die der vierten und fünften Extrusionsöffnung gegenüberliegt, wobei die erste und die zweite Extrusionsöffnung zusammen mit der sechsten Extrusionsöffnung eine dritte Dreiecksformation und die zweite und die dritte Extrusionsöffnung zusammen mit der siebten Extrusionsöffnung eine vierte Dreiecksformation bilden und wobei jeweils die erste, zweite und sechste Extrusionsöffnung der dritten Dreiecksformation und jeweils die zweite, dritte und siebte Extrusionsöffnung der vierten Dreiecksformation im gleichen Abstand voneinander angeordnet sind bzw. sich in ihrem Abstand um höchstens 10%, höchstens 7%, höchstens 5%, höchstens 3%, höchstens 2% oder höchstens 1% voneinander unterscheiden. Die vorgenannten Weiterbildungen haben den Vorteil, dass sich mit dem Druckkopf in verschiedene Fahrtrichtungen relativ zur Orientierung der Öffnungszeile dieselbe Druckgeometrie und dieselbe Gesamtextrusionsbreite erzeugen lässt, ohne dass es einer Drehung des Druckkopfes bedarf. Hinzu kommt, dass in dieser Anordnung drei unterschiedlich orientierte lineare Öffnungszeilen mit jeweils drei Extrusionsöffnungen vorliegen, die sich eine zentrale Extrusionsöffnung teilen. Auf diese Weise kann beim Wechsel der Nutzung der Öffnungszeilen die zentrale Extrusionsöffnung durchgängig zum Austragen des Extrusionsmaterials genutzt werden, um eine ununterbrochene Materialbahn zu erzeugen.

Vorzugsweise sind die Abstände zwischen den Extrusionsöffnungen der ersten und der zweiten Dreiecksformation und, soweit vorhanden, der dritten und der vierten Dreiecksformation gleich oder unterscheiden sich um höchstens 10%, höchstens 7%, höchstens 5%, höchstens 3%, höchstens 2% oder höchstens 1% voneinander. Mit anderen Worten sind die erste, zweite und ggf. die dritte und vierte Dreiecksformation im Wesentlichen deckungsgleich. Auf diese Weise wird eine besonders vorteilhafte Komplementierung der Einsatzbereiche der Extrusionsöffnungen über ein breites Spektrum von Bewegungsrichtungen erreicht, wie auch aus den nachfolgenden Ausführungsbeispielen ersichtlich ist.

Ein fünfter Aspekt der Offenbarung betrifft eine Alternativlösung für einen Druckkopf zur Herstellung eines dreidimensionalen Formteils.

Der gattungsgemäße Druckkopf weist wiederum eine Mehrzahl von Extrusionsöffnungen zum Austragen eines Extrusionsmaterials auf, wobei eine direkte Aufeinanderfolge von mindestens einer ersten, einer zweiten, einer dritten, einer vierten und ggf. einer fünften Extrusionsöffnung auf einer Ausgabeseite des Druckkopfes in einer sich linear erstreckenden Öffnungszeile angeordnet sind bzw. eine sich linear erstreckende Öffnungszeile bilden. Die Alternativlösung zeichnet sich dadurch aus, dass die erste und die zweite Extrusionsöffnung in einem ersten Öffnungsabstand, die zweite und die dritte Extrusionsöffnung in einem zweiten Öffnungsabstand, die dritte und die vierte Extrusionsöffnung in einem dritten Öffnungsabstand und gegebenenfalls die vierte und die fünfte Extrusionsöffnung in einem vierten Öffnungsabstand voneinander angeordnet sind, wobei sich der erste und der zweite Öffnungsabstand und/oder der zweite und der dritte Öffnungsabstand und/oder gegebenenfalls der dritte und der vierte Öffnungsabstand voneinander unterscheiden.

Aufgrund der unterschiedlichen Abstände der Extrusionsöffnungen entlang der Öffnungszeile ist es auch mit dieser Alternativlösung möglich, durch einen kombinierten Einsatz verschiedener Extrusionsöffnungen in einem breiten Spektrum von Bewegungsrichtungen zu drucken, ohne dass es hierfür einer technisch aufwändigen Drehung des Druckkopfes bedarf. Beispielsweise können Kombinationen von Extrusionsöffnungen, die einen kleineren Öffnungsabstand voneinander aufweisen, zum Konturdrucken in größeren relativen Verfahrwinkeln $\beta$ genutzt werden, während Kombinationen von Extrusionsöffnungen, die einen größeren Öffnungsabstand voneinander aufweisen, zum Konturdrucken in kleineren relativen Verfahrwinkeln $\beta$ oder für das Drucken von Füllstrukturen eingesetzt werden.

In einer bevorzugten Ausführungsform ist vorgesehen, dass der jeweils größere Öffnungsabstand ein ganzzahliges Vielfaches des jeweils kleineren Öffnungsabstands bildet. Insbesondere können der erste und der zweite Öffnungsabstand gleich groß und/oder kleiner als der dritte Öffnungsabstand sein. Der dritte Öffnungsabstand kann wiederum kleiner als der vierte Öffnungsabstand sein. Es hat sich gezeigt, dass diese Öffnungsabstände einen besonders vielseitigen und effizienten Einsatz der Extrusionsöffnungen ermöglichen und zu einer verringerten Prozesszeit ohne wesentliche Beeinträchtigung der Qualität des Druckergebnisses führen. Diesbezüglich wird auch auf die nachfolgenden Ausführungsbeispiele verwiesen.

In bevorzugten Ausführungen des vierten und fünften Aspektes besteht die Mehrzahl von Extrusionsöffnungen des Druckkopfes aus höchstens oder genau zwölf, höchstens oder genau zehn, höchstens oder genau neun, höchstens oder genau acht, höchstens oder genau sieben, höchstens oder genau sechs, höchstens oder genau fünf Extrusionsöffnungen. Die sich linear erstreckende Öffnungszeile enthält vorzugsweise höchstens oder genau fünf, höchstens oder genau vier, höchstens oder genau drei Extrusionsöffnungen. Auf diese Weise lassen sich die bereits oben genannten Vorteile der Druckköpfe mit den Vorzügen einer besonders kompakten, leichten und wartungsarmen Druckkopfausführung verbinden.

Im Übrigen unterliegen die Extrusionsöffnungen in den vorgenannten Erfindungsaspekten im Hinblick auf ihren Öffnungsdurchmesser, Querschnitt und Abstand grundsätzlich keinen besonderen Beschränkungen. Geeignete Öffnungsdurchmesser können z. B. im Bereich von 0,05 mm bis 10 mm, insbesondere im Bereich von 0,1 mm bis 5,0 mm, bevorzugt im Bereich von 0,2 bis 2,0 mm liegen. Besonders bevorzugt liegen die Öffnungsdurchmesser im Bereich von 0,4 mm bis 0,8 mm. Solche Öffnungsdurchmesser sind z. B. für den Einsatz im Schmelzschichtverfahren vorgesehen. Es versteht sich, dass andere Einsatzbereiche andere Öffnungsdurchmesser erfordern können, die für den Fachmann ohne Weiteres ermittelbar sind. Außerdem ist es möglich, dass die in der Öffnungszeile angeordneten Extrusionsöffnungen teilweise unterschiedliche Öffnungsdurchmesser aufweisen. Vorzugsweise weisen die Extrusionsöffnungen einen runden bzw. kreisförmigen oder zumindest teilweise runden oder kreisförmigen Querschnitt auf, wobei selbstverständlich auch andere Querschnittsformen möglich sind. Der Öffnungsabstand zwischen zwei benachbarten Extrusionsöffnungen kann von Öffnungsmittelpunkt zu Öffnungsmittelpunkt z. B. das 1,1-fache bis 30-fache und insbesondere das 2-fache bis 15-fache des Durchmessers der Extrusionsöffnungen betragen. Geeignete Abstände für das Schmelzschichtverfahren liegen z. B. im Bereich von 0,4 mm bis 50 mm, insbesondere im Bereich von 0,8 mm bis 20 mm.

In bevorzugten Ausführungen weist der Druckkopf weiterhin je Extrusionsöffnung jeweils eine Materialzuführung zur Aufnahme des Extrusionsmaterials und jeweils eine zwischen der Materialzuführung und der Extrusionsöffnung angeordnete Extrusionsdüse auf, welche die Materialzuführung und die Extrusionsöffnung betriebsfähig bzw. fluidisch miteinander verbindet. Die Materialzuführung ist in Bezug auf die Art und Beschaffenheit des Extrusionsmaterials nicht sonderlich beschränkt und kann z. B. zur Aufnahme eines quasiendlosen, filamentförmigen Extrusionsmaterials oder eines Granulats bzw. einer Schmelze davon ausgebildet sein. Vorzugsweise ist die Materialzuführung zur Aufnahme eines filamentförmigen Extrusionsmaterials ausgebildet, wobei insbesondere jede Materialzuführung dazu eingerichtet ist, ein separates Filament aufzunehmen. Zur Steuerung der Zufuhr des Extrusionsmaterials zum Druckkopf ist in bestimmten Ausführungen vorgesehen, dass der Druckkopf einen Sensor aufweist, der dazu eingerichtet ist, einen Vorschub des filamentförmigen Extrusionsmaterials zur Materialzuführung zu messen und/oder zu regeln. Dies hat unter anderem den Vorteil, dass die Vorschubeinrichtung für das Extrusionsmaterials räumlich vom Druckkopf entkoppelt und das Gewicht des Druckkopfes reduziert werden kann. Auf diese Weise kann der Druckkopf auch mit hohen Verfahrgeschwindigkeiten wirtschaftlich betrieben werden.

Der Druckkopf kann weiterhin eine Temperiereinrichtung umfassen, die dazu eingerichtet ist, das aufgenommene Extrusionsmaterial im Druckkopf bzw. in den Extrusionsdüsen zu erhitzen.

Der Austrag des Extrusionsmaterials durch die Extrusionsdüsen und/oder aus den Extrusionsöffnungen kann z. B. über die oben genannte Steuerung der Zufuhr des Extrusionsmaterials zum Druckkopf steuerbar sein. Alternativ oder zusätzlich kann jeweils zwischen der Materialzuführung und der Extrusionsdüse ein Ventil angeordnet sein, das die Materialzuführung und die Extrusionsöffnung betriebsfähig bzw. fluidisch miteinander verbindet. Vorzugsweise ist jedes Ventil dazu eingerichtet, die fluidische Verbindung zwischen der Materialzufuhr und der Extrusionsdüse selektiv zu öffnen und zu schließen. Die Ventile können dazu eingerichtet sein, diskret in einem oder mehreren Schritten oder auch kontinuierlich zwischen einem Öffnungszustand und einem Schließzustand zu wechseln. Weiterhin können die Ventile dazu ausgelegt sein, die Extrusionsdüsen mit einem kollektiven Druckniveau und/oder jede Düse mit einem individuellen Druckniveau zu beaufschlagen. Weiterhin kann der Druckkopf einen Regler aufweisen, der mit den Ventilen betriebsfähig verbunden und konfiguriert ist, die Ventile so zu betätigen, dass das Extrusionsmaterial aus jeder Extrusionsöffnung selektiv austragbar ist. Selbstverständlich ist es grundsätzlich auch möglich, die Ventile kollektiv betätigen.

Schließlich wird in einem sechsten Aspekt der Erfindung eine Vorrichtung, entsprechend der Merkmale des Anspruchs 12, zur Herstellung eines dreidimensionalen Formteils angegeben.

Die Vorrichtung umfasst gattungsgemäß eine Druckplattform mit einer Druckfläche, einen Druckkopf zum Auftragen eines Extrusionsmaterials in mehreren, entlang einer z-Achse auf der Druckfläche übereinander angeordneten Schichten, eine Antriebseinrichtung, die dazu eingerichtet ist, während des Auftragens zwischen dem Druckkopf und der Druckfläche Relativbewegungen in einer x-Achse und/oder einer y-Achse einer sich senkrecht zur z-Achse erstreckenden x,y-Achsenebene durchzuführen, und eine computerbasierte Steuerungseinrichtung, die mit der Antriebseinrichtung betriebsfähig verbunden und dazu eingerichtet ist, das Auftragen des Extrusionsmaterials in den entlang der z-Achse übereinander angeordneten Schichten auf der Druckfläche zu steuern.

Die erfindungsgemäße Vorrichtung ist dadurch gekennzeichnet, dass die computerbasierte Steuerungseinrichtung zur Durchführung des Verfahrens gemäß dem ersten Aspekt der Erfindung eingerichtet ist.

Die Vorrichtung kann eine Heizeinrichtung aufweisen, die dazu eingerichtet ist, die Druckplattform und/oder einen sich oberhalb der Druckfläche dreidimensional erstreckenden Druckraum zu beheizen.

Kurze Beschreibung der Figuren

Die Erfindung wird im Folgenden anhand von Ausführungsbeispielen unter Bezugnahme auf die beigefügten Figuren näher erläutert. Diese stellen lediglich schematische Prinzipdarstellungen dar und sind nur beispielhaft zu verstehen. Keinesfalls soll die Erfindung auf die Ausführungsbeispiele und die gezeigten Figuren beschränkt sein. Sofern nicht anders angegeben, stehen gleiche Bezugszeichen in den Figuren für gleiche oder analoge Elemente. Aus Gründen der Übersichtlichkeit sind wiederkehrende Merkmale mitunter nicht mehrfach mit einem Bezugszeichen versehen. Es zeigen:

Fig. 1    eine exemplarische Vorrichtung zur Herstellung von dreidimensionalen Formteilen;

Fig. 2    einen Ausschnitt einer Öffnungszeile eines Druckkopfes mit zwei Extrusionsöffnungen in einer exemplarischen Anordnung in Bezug auf die x,y-Achsenebene;

Fig. 3      Vergleichsausführungen einer beispielhaften Druckaufgabe (A) in einer Verfahrensführung gemäß dem Stand der Technik (B) und in erfindungsgemäßen Verfahrensführungen (C, D);

Fig. 4      Beispiele für erfindungsgemäße Verfahrensführungen zur Erzeugung einer gekrümmten Formteilkontur;

Fig. 5      ein Polardiagramm zur kontinuierlichen Variationsmöglichkeit des relativen Verfahrwinkels $\beta$ in Relation zur erzeugbaren Gesamtextrusionsbreite bei erfindungsgemäßem Betrieb eines Druckkopfes mit einheitlich beabstandeten Extrusionsöffnungen;

Fig. 6      ein Polardiagramm zur kontinuierlichen Variationsmöglichkeit des relativen Verfahrwinkels $\beta$ in Relation zur erzeugbaren Gesamtextrusionsbreite B bei erfindungsgemäßem Betrieb eines Druckkopfes mit unterschiedlich beabstandeten Extrusionsöffnungen;

Fig. 7      ein Zwischenergebnis einer erfindungsgemäßen Verfahrensausführung zur Erzeugung von Füllstrukturen;

Fig. 8      beispielhafte Zwischenergebnisse des computerimplementierten Verfahrens in Bezug auf die automatisierte Definition der z-Achse eines Formteils;

Fig. 9      beispielhafte Zwischenergebnisse des computerimplementierten Verfahrens in Bezug auf die automatisierte Definition des Rotationswinkels eines Formteils um die z-Achse;

Fig. 10      einen Ausschnitt eines Druckkopfes in Draufsicht auf die Ausgabeseite,

Fig. 11      Schnittansichten verschiedener Ausführungsformen des Druckkopfes aus Fig. 10 entlang der Schnittlinie A-B;

Fig. 12      ein Beispiel für die Erzeugung geschlossener Strukturen bei großen relativen Verfahrwinkeln $\beta$ durch Betrieb des Druckkopfes aus Fig. 10;

Fig. 13      einen Ausschnitt eines weiteren Druckkopfes in Draufsicht auf die Ausgabeseite;

Fig. 14      exemplarische Beispiele für den Betrieb des Druckkopfes aus Fig. 13;

Fig. 15      einen Ausschnitt eines weiteren Druckkopfes in Draufsicht auf die Ausgabeseite;

Fig. 16      ein Polardiagramm zur kontinuierlichen Variationsmöglichkeit des absoluten Verfahrwinkels $\gamma$ in Relation zur erzeugbaren Gesamtextrusionsbreite B bei Betrieb eines Druckkopfes gem. Fig. 13 oder Fig. 15;

Fig. 17      ein Beispiel für die Erzeugung einer gekrümmten Formteilkontur durch Betrieb des Druckkopfes aus Fig. 15;

Fig. 18      das Polardiagramm aus Fig. 16 mit Kennzeichnung der wechselnden Betriebsmodi des Druckkopfes während der Erzeugung der gekrümmten Formteilkontur gemäß dem Beispiel aus Fig. 17;

Fig. 19      einen Ausschnitt eines weiteren Druckkopfes in Draufsicht auf die Ausgabeseite;

Fig. 20      ein Beispiel für die Erzeugung einer gekrümmten Formteilkontur durch Betrieb des Druckkopfes aus Fig. 19;

Fig. 21      ein Polardiagramm zur kontinuierlichen Variationsmöglichkeit des relativen Verfahrwinkels $\beta$ in Relation zur erzeugbaren Gesamtextrusionsbreite B bei erfindungsgemäßem Betrieb des Druckkopfes aus Fig. 19 mit Kennzeichnung der wechselnden Betriebsmodi während der Erzeugung der gekrümmten Formteilkontur gemäß dem Beispiel aus Fig. 20;

Fig. 22      einen Ausschnitt eines weiteren Druckkopfes in Draufsicht auf die Ausgabeseite;

Fig. 23      Referenzbeispiele für weitere Druckköpfe jeweils in Draufsicht auf die Ausgabeseite;

Fig. 24      eine schematische, idealisierte Diagrammdarstellung der Verfahrgeschwindigkeit v des Druckkopfes, der Materialförderrate Q und der Prozesszeit t während der Erzeugung einer durchgehenden Materialbahn der Länge $l_1+l_2$ mit unterschiedlichen Bahnbreiten $b_1$ und $b_2$ durch Änderung der Verfahrgeschwindigkeit v des Druckkopfes (A, Referenz) und durch Änderung der Materialförderrate Q (B);

Fig. 25      eine schematische Diagrammdarstellung der Verfahrgeschwindigkeit v des Druckkopfes, der Materialförderrate Q und der Prozesszeit t während der Erzeugung einer durchgehen-

den Materialbahn der Länge $l_1+l_2$ mit unterschiedlichen Bahnbreiten $b_1$ und $b_2$ durch erfindungsgemäße Änderung der Materialförderrate Q (A) sowie durch Kombination der Änderung der Materialförderrate Q und der Verfahrgeschwindigkeit v des Druckkopfes (B);

Fig. 26    ein Beispiel für eine erfindungsgemäße Verfahrensführung zur Erzeugung zusammenhängender Teilabschnitte unterschiedlicher Orientierung durch wechselnde und kombinierte Nutzung von Öffnungszeilen des Druckkopfes.

## Detaillierte Beschreibung von Ausführungsbeispielen

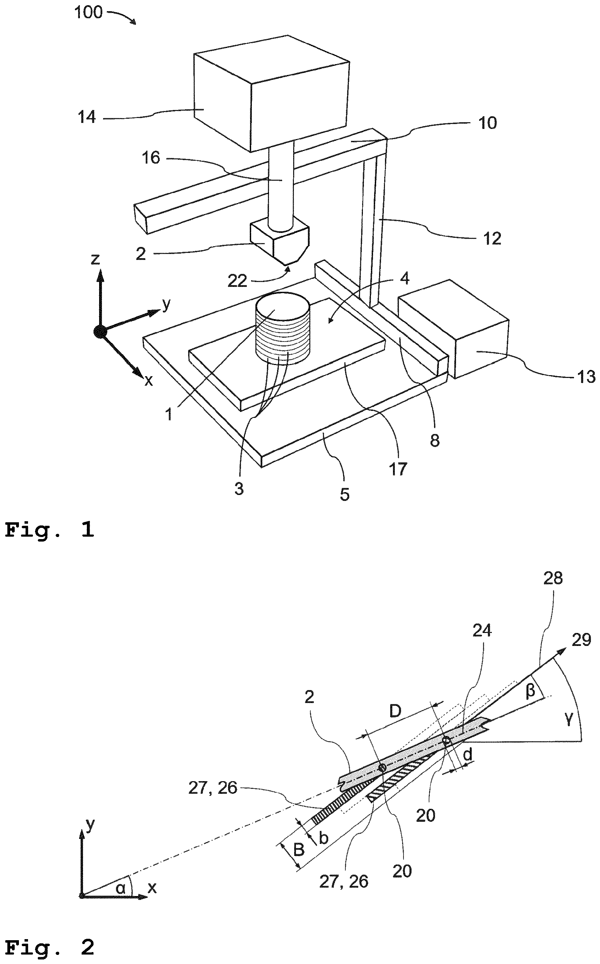

Fig. 1 zeigt eine Übersicht zu einer beispielhaften Vorrichtung 100 für die schichtweise Herstellung eines dreidimensionalen Formteils 1 in einer kartesischen Ausführungsvariante. Die Vorrichtung 100 basiert im gezeigten Beispiel auf einer handelsüblichen 3-Achs-Kinematik mit Linearführungen, mit der ein Druckkopf 2 mithilfe eines x-Achsenaktuators 8 und eines y-Achsenaktuators 10 zum Herstellen der Schichten 3 des Formteils 1 in der x-Achse und/oder y-Achse der x,y-Achsenebene relativ zur Druckfläche 4 einer Druckplattform 5 bewegt wird. Der Abstand zwischen dem Druckkopf 2 und der Druckfläche 4 wird zwischen zwei aufeinanderfolgenden Schichten 3 über den z-Achsenaktuator 12 verstellt.

Selbstverständlich kann es auch Variationen in der Achsenverteilung geben, um die erfindungsgemäß erforderlichen Relativbewegungen zwischen dem Druckkopf 2 und der Druckfläche 4 in der z-Achse und der x,y-Achsenebene zu realisieren, wobei es nicht zwingend erforderlich ist, dass die x-, y- und z-Achse, in denen die Relativbewegungen des Druckkopfes erfolgen, und die jeweiligen Aktuatorenachsen gleich ausgerichtet sind. Beispielsweise kann die Druckplattform 5 auf der z-Achse bewegt werden. Alternativ kann sich der Druckkopf 2 in der x,z-Ebene und die Druckplattform 5 auf der y-Achse bewegen. Weitere geeignete Kinematiken, die das Polarkoordinatensystem, mehrachsige Roboterarme oder dergleichen nutzen, sind dem Fachmann bekannt und äquivalent auf die Erfindung anwendbar.

Ein Materialvorrat 14 und eine Materialzuleitung 16 sind dazu eingerichtet, dem Druckkopf 2 während des Druckvorgangs das Extrusionsmaterial 26 (hier nicht gezeigt), z. B. Halbzeug in Form eines quasiendlosen Filaments oder als Granulat, bereitzustellen. Die Austragung des Extrusionsmaterials 26 erfolgt auf der Ausgabeseite 22 des Druckkopfes 2. Mithilfe einer Heizvorrichtung 17 wie z. B. einer Heizplatte kann die Temperatur der Druckfläche 4 und des sich darüber erstreckenden Druckraumes angepasst werden, um z. B. die Anhaftung des Extrusionsmaterials 26 zu verbessern und/oder die Abkühlung zu verlangsamen.

Fig. 2 zeigt einen Ausschnitt eines beispielhaften mehrdüsigen Druckkopfes 2 in einer exemplarischen Anordnung in Bezug auf die x,y-Achsenebene während eines Druckvorgangs. Der Ausschnitt des Druckkopfes 2 zeigt eine sich linear erstreckende Öffnungszeile 24, die zwei Extrusionsöffnungen 20 mit dem Durchmesser d enthält. Die Extrusionsöffnungen 20 sind in dem Abstand D in der Öffnungszeile 24 angeordnet. Der Druckkopf 2 ist bezogen auf die sich linear erstreckende Öffnungszeile 24 in dem Einstellwinkel $\alpha$ in der x,y-Achsenebene ausgerichtet und wird in dem gezeigten Beispiel durch eine Relativbewegung 28 entlang des Pfeils in die Bewegungsrichtung 29 in der x,y-Achsenebene bzw. relativ dazu bewegt. Der zwischen der Bewegungsrichtung 29 der Relativbewegung 28 und der sich linear erstreckenden Öffnungszeile 24 des Druckkopfes 2 vorliegende Differenzwinkel entspricht dem relativen Verfahrwinkel $\beta$ des Druckkopfes 2. Der globale Verfahrwinkel $\gamma$ des Druckkopfes 2 in Bezug auf die x,y-Achsenebene ergibt sich dementsprechend aus $\gamma = \alpha + \beta$. Durch den gleichzeitigen Austrag des Extrusionsmaterials 26 aus den Extrusionsöffnungen 20 während der Relativbewegung 28 des Druckkopfes 2 in die Bewegungsrichtung 29 wird das Extrusionsmaterial 26 in parallelen Materialbahnen 27 der Bahnbreite b auf der Druckfläche 4 und/oder einer der darauf angeordneten Schichten aufgetragen. Der Quotient b/d aus der Bahnbreite b und dem Öffnungsdurchmesser d wird als "relative Extrusionsbreite" bezeichnet. Durch eine oder mehrere Relativbewegungen 28 des Druckkopfes 2 lässt sich eine geschlossene bzw. vollgefüllte Fläche der Gesamtextrusionsbreite B erzeugen. Der relative Verfahrwinkel $\beta$, bei dem sich durch einfache oder mehrfache Relativbewegung 28 des Druckkopfes 2 eine geschlossene Fläche ergibt, berechnet sich nach

$$\beta = sin^{-1}\frac{b \cdot m}{D},$$

wobei m die Anzahl der Relativbewegungen 28 bis zur Vollfüllung ist (in Fig. 2 ist m = 2). Die Gesamtextrusionsbreite B einer geschlossenen Fläche, die durch m-fache Relativbewegungen 28 des Druckkopfes 2 erzeugt werden kann, berechnet sich entsprechend nach

$$B = b \cdot m \cdot n \quad \text{oder} \quad B = sin\,\beta \cdot D \cdot n,$$

wobei n die Anzahl der Extrusionsöffnungen 20 ist (in Fig. 2 ist n = 2).

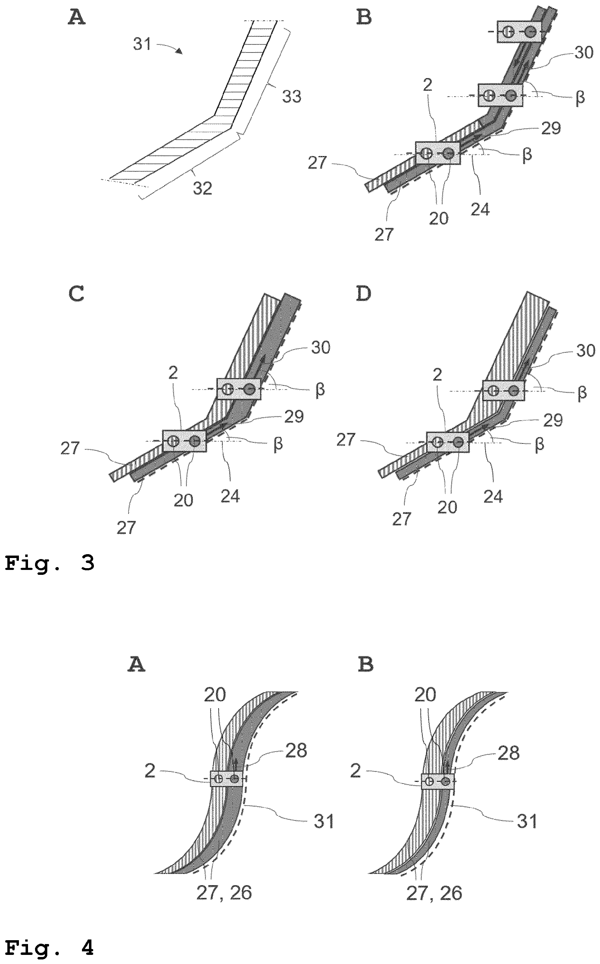

Fig. 3 zeigt die Ausführung einer beispielhaften 3D-Druckaufgabe (A) bei konventionellem Betrieb eines Druckkopfes 2 (B) im Vergleich zu einem Druckkopf 2, der in erfindungsgemäßen Verfahrensweisen betrieben wird (C, D). Die Aufgabenstellung besteht darin, zwei aufeinanderfolgende Konturabschnitte unterschiedlicher Orientierung zu erzeugen, die eine geschlossene Gesamtbreite B von mindestens dem 2-fachen des Öffnungsdurchmessers d der Extrusionsöffnungen 20 erhalten sollen. Wie es in der Praxis oft üblich ist, wird dabei angenommen, dass nur die äußere Materialbahn 27 maßhaltig sein muss, während nach innen auch eine größere Breite erzeugt werden kann. Zur Ausführung wird der Druckkopf 2 in verschiedene Bewegungsrichtungen 29, 30 entlang des Druckpfades 31 bewegt, nämlich in eine erste Bewegungsrichtung 29 in einem ersten Teilabschnitt 32 des Druckpfades 31 und eine zweite Bewegungsrichtung 30 in einem sich an den ersten Teilabschnitt 32 anschließenden zweiten Teilabschnitt 33 des Druckpfades 31.

Der dem Beispiel zugrunde gelegte Druckkopf 2 hat eine sich linear erstreckende Öffnungszeile 24 mit zwei Extrusionsöffnungen 20, wobei in Bezug auf die Öffnungszeile ein Einstellwinkel $\alpha$ von 0° angenommen wird, d. h. der Druckkopf 2 ist jeweils parallel zur x-Achse ausgerichtet. Der Einstellwinkel $\alpha$ ist während des Verfahrens unveränderlich. Die Teilabschnitte 32, 33 sollen in dem Beispiel eine identische Länge von 100 mm aufweisen.

Fig. 3B zeigt, dass sich bei konventionellem Betrieb des Druckkopfes 2 mit einer üblichen relativen Extrusionsbreite, die konstant b/d=1 beträgt, nur in dem ersten Teilabschnitt 32 beide Extrusionsöffnungen 20 parallel nutzen lassen, um die Druckaufgabe zu lösen. In dem zweiten Teilabschnitt 33 ist der relative Verfahrwinkel $\beta$ größer als in dem ersten Teilabschnitt 32, sodass sich bei parallelem Austrag des Extrusionsmaterials 26 aus den Extrusionsöffnungen 20 mit der relativen Extrusionsbreite b/d=1 in einer Relativbewegung keine geschlossene Fläche der erforderlichen Breite erzeugen lässt. Der zweite Teilabschnitt 33 kann daher nur anforderungsgemäß erzeugt werden, indem der Druckkopf 2 mehrfach verfahren wird, wobei nur eine einzelne Extrusionsöffnung 20 für den Materialaustrag genutzt werden kann. Auf diese Weise muss der Druckkopf 2 während des Materialaustrags eine Gesamtstrecke von etwa 300 mm zurücklegen, um die Druckaufgabe zu lösen.

Diese Gesamtstrecke lässt sich mithilfe des erfindungsgemäßen Verfahrens erheblich reduzieren. Fig. 3C zeigt, dass sich durch die Vergrößerung des relativen Materialaustrags pro Verfahrstrecke durch die beiden Extrusionsöffnungen 20 in der zweiten Bewegungsrichtung 30 auch im zweiten Teilabschnitt 33 in einer einzigen Relativbewegung eine geschlossene Fläche der erforderlichen Mindestbreite erzeugen lässt. Alternativ kann, wie Fig. 3D zeigt, der relative Materialaustrag auch nur durch eine ausgewählte Extrusionsöffnung 20 (hier die in der Öffnungszeile 24 links angeordnete Extrusionsöffnung 20) vergrößert werden, um durch die beiden Extrusionsöffnungen 20 der zweiten Bewegungsrichtung 30 auch im zweiten Teilabschnitt 33 in einer einzigen Relativbewegung eine geschlossene Fläche der erforderlichen Mindestbreite erzeugen. Auf diese Weise können die beiden Extrusionsöffnungen 20 auf dem gesamten Druckpfad 31 simultan in einer einzigen durchgehenden Fahrbewegung genutzt werden, um die Druckaufgabe zu lösen. Dadurch reduziert sich die Gesamtfahrstrecke des Druckkopfes 2 im erfindungsgemäßen Betrieb auf etwa 200 mm, entsprechend einer Einsparung von 33% gegenüber dem herkömmlichen Verfahren.

Ergänzend zeigt Fig. 4, dass es mit dem erfindungsgemäßen Verfahren darüber hinaus durch eine kontinuierliche Änderung der Bewegungsrichtung des Druckkopfes 2 in Kombination mit einer kontinuierlichen Vergrößerung bzw. Verringerung des relativen Materialaustrags des Extrusionsmaterials 26 aus beiden Extrusionsöffnungen 20 (A) oder eine der beiden Extrusionsöffnung 20 (B) erstmals möglich ist, Konturen mit verschiedenen Krümmungsradien in einer durchgehenden Bewegung des Druckkopfes 2 entlang eines Druckpfads 31 zu erzeugen, ohne dass es hierfür erforderlich ist, den Druckkopf um die eigene Achse zu rotieren. Auf diese Weise lassen sich mithilfe des erfindungsgemäßen Verfahrens komplexe Strukturen besonders zeit- und kosteneffizient erzeugen.

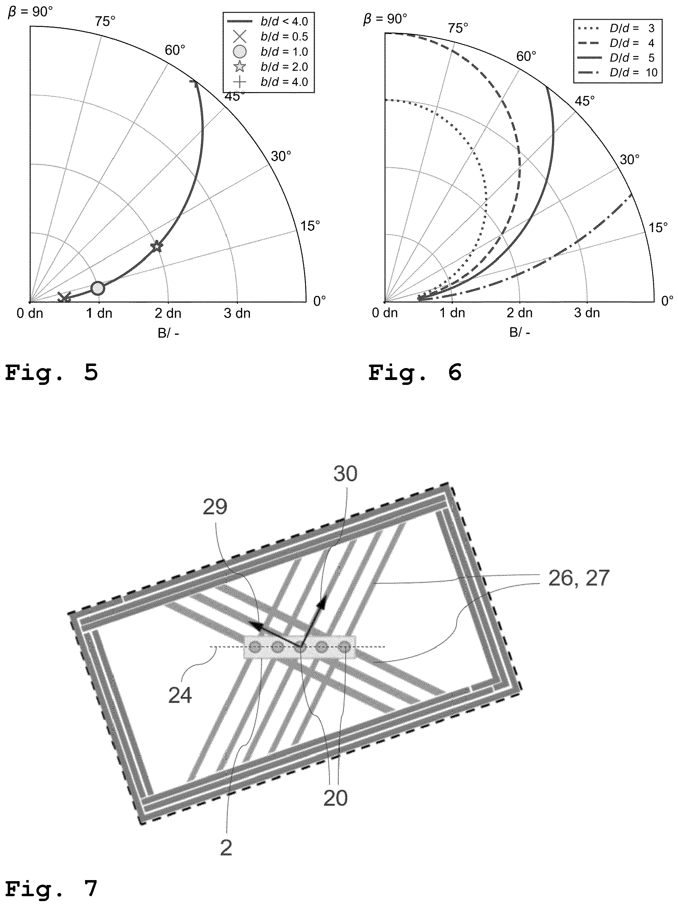

Die Zusammenhänge sind zusätzlich in Fig. 5 für den Fall einer Relativbewegung m = 1 und einen relativen Öffnungsabstand D/d = 5 für einen erfindungsgemäß betriebenen Druckkopf 2 dargestellt. Das Polardiagramm zeigt die erzeugbare geschlossene Gesamtextrusionsbreite B in Abhängigkeit vom relativen Verfahrwinkel $\beta$ und der relativen Extrusionsbreite b/d. Durch Variation der relativen Extrusionsbreite zwischen 0,5 und 4,0 lassen sich in dieser Ausführung in relativen Verfahrwinkeln $\beta$ von etwa 5° bis etwa 50° mit einer einzelnen Relativbewegung geschlossene Flächen mit Gesamtextrusionsbreiten B bis zum 4-fachen des Öffnungsdurchmessers der Extrusionsöffnungen 20 erzeugen.

Die Erfindung erlaubt es, durch die Wahl der relativen Öffnungsabstände D/d zudem die relativen Verfahrwinkel $\beta$ und/oder die erzeugbare Gesamtextrusionsbreite B an die Anforderungen der Druckaufgabe anzupassen (Fig. 6). Das Polardiagramm zeigt die mit einem Druckkopf 2 erzeugbare geschlossene Gesamtextrusionsbreite B in Abhängigkeit vom relativen Verfahrwinkel $\beta$ und dem relativen Öffnungsabstand D/d für den Fall einer Relativbewegung m = 1 und einer Variation der relativen Extrusionsbreite von 0 < b/d < 4. Es ist ersichtlich, dass sich mithilfe relativer Öffnungsabstände D/d zwischen 3 und 10 mit dem erfindungsgemäßen Verfahren nahezu über das gesamte Spektrum an möglichen relativen Verfahrwinkeln $\beta$ in einer einzigen Relativbewegung geschlossene Flächen erzeugen lassen. Ausführungen mit einem großen relativen Abstand der Extrusionsöffnungen 20 eignen sich z. B. für die Herstellung von Füllstrukturen (z. B. mit einem Füllgrad von etwa 10%). Mit kleinen relativen Öffnungsabständen von z. B. D/d = 3 oder 4 kann ein weiter Bereich von relativen Verfahrwinkeln $\beta$ bedient werden, beispielsweise zur Erzeugung von Konturen mit geraden Abschnitten unterschiedlicher Orientierung oder mit gekrümmten Verläufen.

Fig. 7 zeigt eine weitere erfindungsgemäße Verfahrensausführung anhand einer beispielhaften Erzeugung von Füllstrukturen. Symmetrische Bauteile erfordern unter Umständen auch eine Symmetrie der Füllstruktur. Wenn die Bauteilsymmetrie und die Ausrichtung der Öffnungszeile 24 nicht zusammenfallen, dann muss in solchen Fällen auch die Füllstruktur gedreht werden. Dadurch verändern sich zwangsläufig auch die Abstände der Materialbahnen 27 des Extrusionsmaterials 26 in Abhängigkeit von der Bewegungsrichtung 29, 30 des Druckkopfes 2. Das erfindungsgemäße Verfahren löst dieses Problem, indem die Abstände zwischen den Materialbahnen 27 durch die Nutzung ausgewählter Extrusionsöffnungen 20 der linearen Öffnungszeile 24 aneinander angenähert und gleichzeitig über die Vergrößerung oder Verringerung des relativen Materialaustrags dieselbe Materialmenge bezogen auf den Bahnabstand ausgetragen wird. Damit werden die Steifigkeiten der resultierenden Struktur in den Richtungen beider Materialbahnen 27 angeglichen. Dies erfolgt im gezeigten Beispiel, indem in der ersten Bewegungsrichtung 29 nur jede zweite Extrusionsöffnung 20 in der linearen Öffnungszeile 24 des Druckkopfes 2 genutzt wird, während in der zweiten Bewegungsrichtung 30 alle Extrusionsöffnungen 20 der Öffnungszeile 24 zum Einsatz kommen.

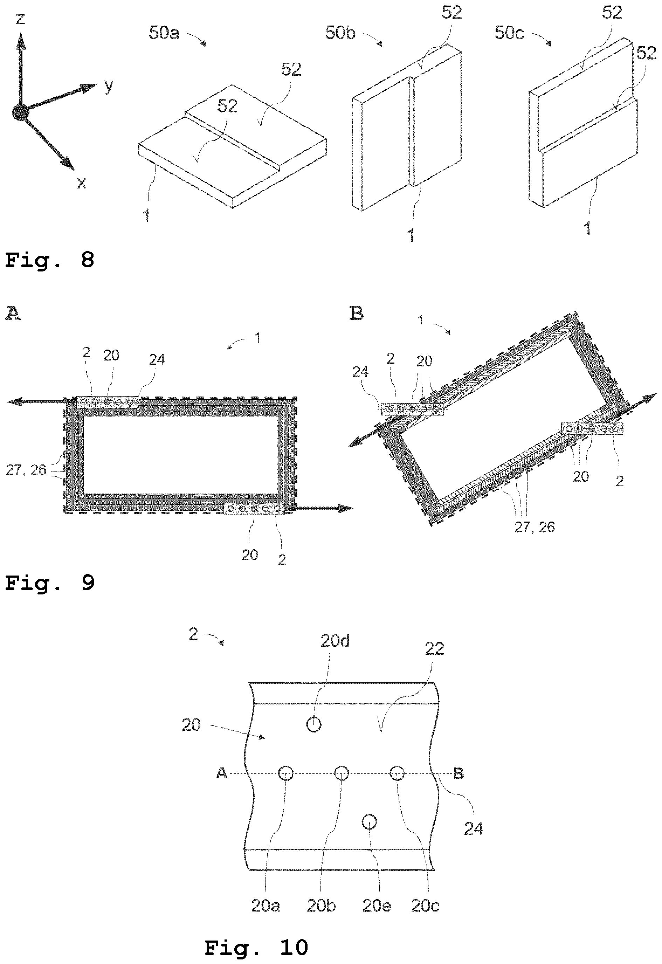

Das computerimplementierte Verfahren zur Steuerung der Herstellung eines dreidimensionalen Formteils 1 beinhaltet ein automatisiertes Definieren der z-Achse des Formteils 1 und ein automatisiertes Definieren eines Rotationswinkels des Formteils 1 um die z-Achse, der das Formteil 1 in der x,y-Achsenebene ausrichtet. In Fig. 8 sind Zwischenergebnisse der automatisierten Definition der z-Achse anhand eines einfachen exemplarischen Formteils 1 mit einer Kantenlänge von $100 \times 100 \times 10$ mm und einer Aussparung von $100 \times 50 \times 5$ mm veranschaulicht. Das Formteil 1 ist in drei verschiedenen virtuellen z-Achsenausrichtungen 50a, 50b, 50c auf der Druckfläche 4 angeordnet. Wenn, wie in einer erfindungsgemäßen Verfahrensausführung vorgesehen ist, die Oberflächenabschnitte 52 in der jeweiligen z-Achsenausrichtung 50a, 50b, 50c entlang der z-Achse auf die x,y-Achsenebene projiziert werden, ergibt sich für die z-Achsenausrichtung 50a ein Projektionsflächeninhalt, auch als "Schattenfläche" bezeichnet, von 20.000 mm², für die z-Achsenausrichtung 50b ein Projektionsflächeninhalt von 1.500 mm² und für die z-Achsenausrichtung 50c ein Projektionsflächeninhalt von 2.000 mm². Dementsprechend sieht das erfindungsgemäße Verfahren eine Definition der z-Achse anhand der z-Achsenausrichtung 50a vor, da diese den größten Projektionsflächeninhalt aufweist. Die Erfinder haben den Vorteil erkannt, dass sich auf diese Weise große Flächeninhalte in den Schnittflächen ergeben, die eine hohe Ausnutzung der Parallelextrusion durch die Extrusionsöffnungen 20 des Druckkopfes 2 in dem Einstellwinkel α gewährleisten. Gleichzeitig ergeben sich beim schichtweisen Auftragen des Extrusionsmaterials 26 verhältnismäßig längere lokale Abkühlzeiten bis zur Auftragung der jeweils nächsten Schicht 3, sodass zusätzliche Wartezeiten zur Abkühlung, die oft bei platzsparenden Anordnungen wie in den z-Achsenausrichtungen 50b und 50c erforderlich sind, in der Regel entfallen können.

Fig. 9 zeigt beispielhafte Zwischenergebnisse des computerimplementierten Verfahrens in Bezug auf die automatisierte Definition des Rotationswinkels eines exemplarischen Formteils 1 um die z-Achse. Bei dem Formteil 1 handelt es sich um ein einfaches Rechteck mit einer langen Kante von 200 mm Länge und einer kurzen Kante von 100 mm Länge, dessen Wanddicke mindestens dem 3-fachen des Öffnungsdurchmessers d der Extrusionsöffnungen 20 des Druckkopfes 2 entsprechen soll. Die z-Achse erstreckt sich im gezeigten Beispiel in Richtung des Betrachters. Zur Definition des Rotationswinkels um die z-Achse wird, wie in einer Variante des Verfahrens vorgesehen ist, das Formteil 1 in zwei verschiedenen Rotationswinkeln gemäß Fig. 9A und 9B um die z-Achse orientiert und jeweils die für die Herstellung des Schnittes benötigte Verfahrstrecke des Druckkopfes 2 in dem Einstellwinkel α, der im vorliegenden Beispiel 0° beträgt, ermittelt. Bei der in Fig. 9A gezeigten Ausrichtung, bei der die langen Kanten des Formteils 1 parallel zur Öffnungszeile 24 liegen, können die Wände entlang der Kanten des Formteils 1 nur durch Einzelextrusion, d. h. ein Austragen des Extrusionsmaterials 26 durch eine einzelne Extrusionsöffnung 20, dargestellt werden. Die Wände müssen daher durch mehrfaches Verfahren des Druckkopfes 2 erzeugt werden. Auf diese Weise ergibt sich eine für die Herstellung des gezeigten Formteilausschnittes erforderliche Verfahrstrecke von etwa 1.800 mm. Die in Fig. 9B gezeigte Ausrichtung ermöglicht mit dem Einstellwinkel α des Druckkopfes 2 dagegen entlang der langen Kanten des Rechtecks einen gleichzeitigen Austrag des Extrusionsmaterials 26 aus drei Extrusionsöffnungen 20. Auf diese Weise verkürzt sich die zur Herstellung erforderliche Verfahrstrecke auf etwa 1.000 mm, was einer Einsparung von 44% gegenüber der herkömmlichen Ausrichtung entspricht. Im vorliegenden Beispiel würde der Rotationswinkel um die z-Achse anhand bzw. in Form der in Figur 9B gezeigten Orientierung definiert werden, da hier die Verfahrstrecke eine geringere Streckenlänge aufweist. Das Beispiel macht anhand eines Formteils 1 mit einer sehr einfachen Geometrie deutlich, dass mithilfe des erfindungsgemäßen Verfahrens eine überraschend hohe Reduktion der Herstellungszeit erzielt werden kann.

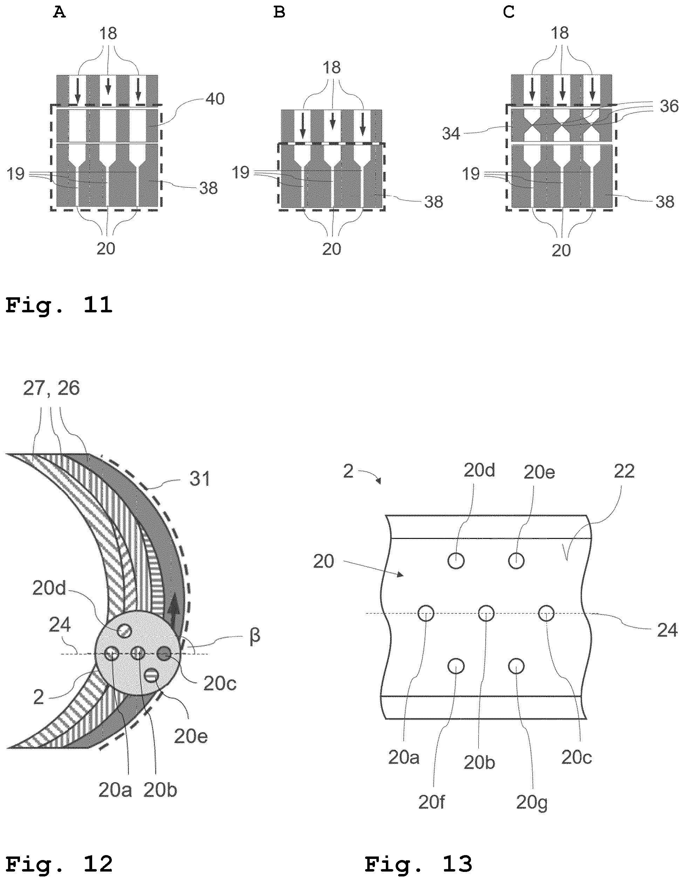

Fig. 10 zeigt einen Ausschnitt eines Druckkopfes 2 in Draufsicht auf die Ausgabeseite 22. Der gezeigte Ausschnitt umfasst fünf Extrusionsöffnungen 20, von denen eine erste Extrusionsöffnung 20a, eine zweite Extrusionsöffnung 20b und eine dritte Extrusionsöffnung 20c gleichmäßig beabstandet in einer sich linear erstreckenden Öffnungszeile 24 angeordnet sind. Eine vierte Extrusionsöffnung 20d bildet zusammen mit der ersten und der zweiten Extrusionsöffnung 20a, 20b eine erste Dreiecksformation. Eine fünfte Extrusionsöffnung 20e ist auf der der vierten Extrusionsöffnung gegenüberliegenden Seite der Öffnungszeile 24 angeordnet und bildet zusammen mit der zweiten und dritten Extrusionsöffnung 20b, 20c eine zweite Dreiecksformation. Die erste, zweite und vierte Extrusionsöffnung 20a, 20b, 20d und die zweite, dritte und fünfte Extrusionsöffnung 20b, 20c und 20e sind jeweils im gleichen Öffnungsabstand D voneinander angeordnet. Auf diese Weise bilden die Extrusionsöffnungen 20 zwei deckungsgleiche, gleichseitige Dreiecke. Diese Ausführungsform hat unter anderem den Vorteil, dass die Extrusionsöffnungen 20d und 20e zusammen mit der zentralen Extrusionsöffnung 20b eine zusätzliche lineare Öffnungszeile bilden, die etwa um 60° gedreht bezogen auf die Öffnungszeile 24 vorliegt. Auf diese Weise kann diese zusätzliche Öffnungszeile in anderen Geometriebereichen eingesetzt werden als die Öffnungszeile 24 und deren Anwendungsbereich besonders vorteilhaft ergänzen (vgl. Fig. 12).

Fig. 11 zeigt Schnitte durch den in Fig. 10 gezeigten Druckkopf 2 entlang der Schnittlinie A-B in verschiedenen Ausführungsformen. Fig. 11A zeigt eine Variante, die für die Aufnahme eines festen Extrusionsmaterials 26 vorgesehen ist. Über die Materialzuführungen 18 können die Extrusionsdüsen 19 individuell mit dem Extrusionsmaterial 26 beaufschlagt werden (hier angedeutet durch die unterschiedlichen Längen der Pfeile), um z. B. den Austrag des Extrusionsmaterials 26 aus den Extrusionsöffnungen 20 wie im erfindungsgemäßen Verfahren vorgesehen zu vergrößern oder zu verringern. Mithilfe der Temperiereinrichtung 38 wird das Extrusionsmaterial 26 in dem Druckkopf 2 zur Schmelze erhitzt und anschließend durch die Extrusionsdüsen 19 über die Extrusionsöffnungen 20 extrudiert. Eine Kühleinrichtung 40 verhindert eine ungewollte Erwärmung der übrigen Teile des Druckkopfes 2, mit dem Zweck, das zugeförderte Extrusionsmaterial 26 im Festzustand zu belassen. Die Fig. 11B und Fig. 11C zeigen Varianten des Druckkopfes 2 für die Zufuhr von Extrusionsmaterial 26 in flüssiger Form. Die in Figur 11B gezeigte Variante ist für eine individuelle Druckbeaufschlagung der Extrusionsdüsen 19 vorgesehen (angedeutet durch die unterschiedlichen Längen der Pfeile). Die in Figur 11C gezeigte Variante des Druckkopfes 2 sieht eine Beaufschlagung der Extrusionsdüsen 19 mit einem kollektiven Druck vor, angedeutet durch die einheitliche Länge der Pfeile in Fig. 11C. Zwischen den Materialzuführungen 18 und den Extrusionsdüsen 19 ist ein Ventilblock 34 angeordnet. Jeder Extrusionsdüse 19 ist ein Ventil 36 zugeordnet, mit dessen Hilfe sich der Austrag des Extrusionsmaterials 26 über die Extrusionsdüsen 19 aus den Extrusionsöffnungen 20 individuell steuern lässt.

Fig. 12 veranschaulicht beispielhaft die Einsetzbarkeit des in Fig. 10 gezeigten Druckkopfes 2 in einer durchgehenden Relativbewegung m=1, die verschiedene Bewegungsrichtungen des Druckkopfes umfasst, mit einem konstanten Einstellwinkel α von 0° auf dem gekrümmten Druckpfad 31. Hierbei zeigt sich der besondere Vorteil der erfindungsgemäßen Anordnung der Extrusionsöffnungen 20 in gleichseitigen Dreiecken: Die Extrusionsöffnungen 20d, 20e liegen bei einem relativen Verfahrwinkel β von 90° genau in den Zwischenräumen der Extrusionsöffnungen 20a, 20b, 20c. Bei nahezu gleichseitigen Dreiecken oder relativen Verfahrwinkeln β nahe 90° ist dies noch annähernd der Fall. Dies wird mit Vorteil genutzt, wenn z. B. bei der Durchführung des erfindungsgemäßen Verfahrens die realisierbare Bahnbreite b der mit den Extrusionsöffnungen 20a, 20b, 20c erzeugbaren Materialbahnen 27 nicht ausreicht, um sämtliche Zwischenräume zu schließen. Es werden dann, wie im mittleren Abschnitt des Druckpfades 31 gezeigt, die Extrusionsöffnungen 20d, 20e selektiv zugeschaltet, um Zwischenräume bei großen relativen Verfahrwinkeln β aufzufüllen. Auf diese Weise werden zusätzliche Relativbewegungen des Druckkopfes 2 vermieden und die Prozesszeit erheblich verkürzt. Der besondere Vorteil in der Anordnung im gleichseitigen Dreieck liegt darin, dass für jede im gleichseitigen Dreieck vorliegende Öffnungszeile eine Extrusionsöffnung zum Auffüllen des Zwischenraumes vorhanden ist. Da sich die Einsatzbereiche der Extrusionsöffnungen 20a bis 20e in vorteilhafter Weise ergänzen, können mit dem Druckkopf 2 bereits mit wenigen Extrusionsöffnungen 20 komplexe Strukturen auch ohne eine Drehung des Druckkopfes 2 um die eigene Achse besonders zeit- und kosteneffizient erzeugt werden.

Fig. 13 zeigt einen Ausschnitt eines weiteren Druckkopfes 2 in Draufsicht auf die Ausgabeseite 22. Der gezeigte Ausschnitt umfasst sieben Extrusionsöffnungen 20, von denen eine erste Extrusionsöffnung 20a, eine zweite Extrusionsöffnung 20b und eine dritte Extrusionsöffnung 20c gleichmäßig beabstandet in einer sich linear erstreckenden Öffnungszeile 24 angeordnet sind. Eine vierte Extrusionsöffnung 20d bildet zusammen mit der ersten und der zweiten Extrusionsöffnung 20a, 20b eine erste Dreiecksformation; eine fünfte Extrusionsöffnung 20e, die auf der gleichen Seite der Öffnungszeile 24 wie die vierte Extrusionsöffnung angeordnet ist, bildet zusammen mit der zweiten und dritten Extrusionsöffnung 20b, 20c eine zweite Dreiecksformation. Eine zusätzliche sechste und siebte Extrusionsöffnung 20f, 20g sind auf der Seite der Öffnungszeile 24 angeordnet, die der vierten und fünften Extrusionsöffnung 20d, 20e gegenüberliegt. Die erste und die zweite Extrusionsöffnung 20a, 20b bilden zusammen mit der sechsten Extrusionsöffnung 20f eine dritte Dreiecksformation, während die zweite und die dritte Extrusionsöffnung 20b, 20c zusammen mit der siebten Extrusionsöffnung eine vierte Dreiecksformation bilden. Die erste, zweite und vierte Extrusionsöffnung 20a, 20b, 20d; die zweite, dritte und fünfte Extrusionsöffnung 20b, 20c und 20e; die erste, zweite und sechste Extrusionsöffnung 20a, 20b, 20f und die zweite, dritte und siebte Extrusionsöffnung 20b, 20c, 20g sind jeweils im gleichen Öffnungsabstand D voneinander angeordnet. Auf diese Weise bilden die Extrusionsöffnungen 20 mehrere deckungsgleiche, gleichseitige Dreiecke.

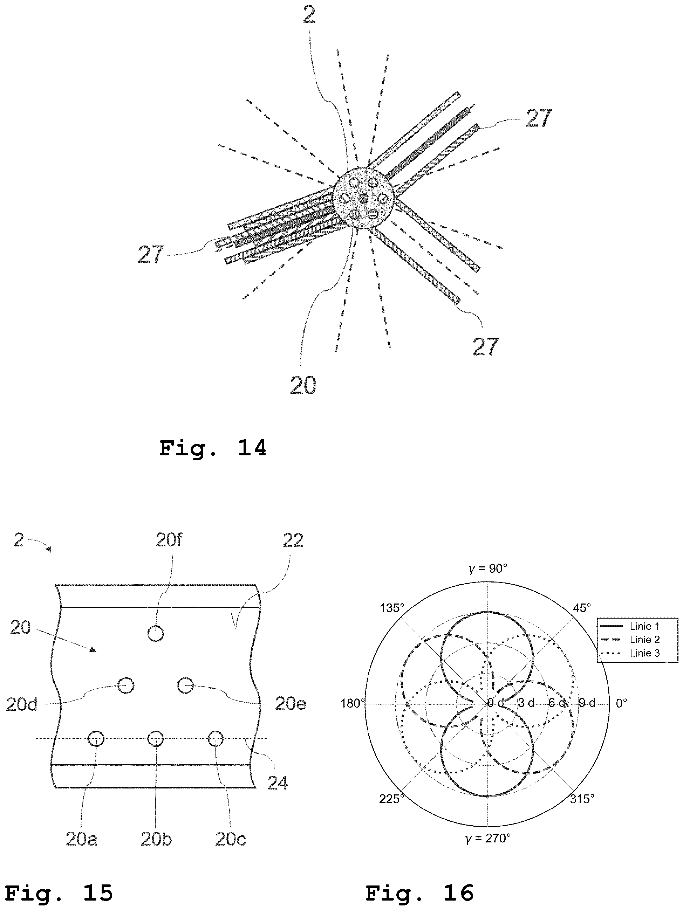

Die besonderen Vorteile, die sich aus dieser Anordnung ergeben, sind beispielhaft in Fig. 14 veranschaulicht. Dadurch, dass die Extrusionsöffnungen 20 insgesamt drei gleichartige lineare Öffnungszeilen 24 bilden und die übrigen Extrusionsöffnungen 20 jeweils genau in den Zwischenräumen der Extrusionöffnungen der jeweiligen Öffnungszeile 24 liegen, können bereits bei herkömmlichem Betrieb und ohne Drehung des Druckkopfes 2 vollgefüllte Flächen in zwölf verschiedenen Bewegungsrichtungen erzeugt werden, hier angedeutet durch die gestrichelten Linien. Öffnungszeilen 24, die annähernd senkrecht zur Bewegungsrichtung ausgerichtet sind, können in denselben Bewegungsrichtungen außerdem mit Vorteil für die Erzeugung teilgefüllter Flächen eingesetzt werden, wobei Füllgrade z. B. im Bereich von 10-50% möglich sind.

Fig. 15 zeigt einen Ausschnitt eines weiteren Druckkopfes 2 in Draufsicht auf die Ausgabeseite 22. Der gezeigte Ausschnitt umfasst sechs Extrusionsöffnungen 20, von denen eine direkte Aufeinanderfolge einer ersten Extrusionsöffnung 20a, einer zweiten Extrusionsöffnung 20b und einer dritten Extrusionsöffnung 20c in gleichmäßigen Abständen voneinander in einer sich linear erstreckenden Öffnungszeile 24 angeordnet sind. Eine vierte Extrusionsöffnung 20d bildet zusammen mit der ersten und der zweiten Extrusionsöffnung 20a, 20b eine erste Dreiecksformation; eine fünfte Extrusionsöffnung 20e, die auf der gleichen Seite der Öffnungszeile 24 wie die vierte Extrusionsöffnung 20d angeordnet ist, bildet zusammen mit der zweiten und dritten Extrusionsöffnung 20b, 20c eine zweite Dreiecksformation. Eine zusätzliche sechste Extrusionsöffnung 20f ist auf der Seite der vierten und fünften Extrusionsöffnung 20d, 20e angeordnet, die der Öffnungszeile 24 gegenüberliegt, und bildet zusammen mit der vierten und fünften Extrusionsöffnung 20d, 20e eine dritte Dreiecksformation. Die erste, zweite und vierte Extrusionsöffnung 20a, 20b, 20d; die zweite, dritte und fünfte Extrusionsöffnung 20b, 20c und 20e sowie die vierte, fünfte und sechste Extrusionsöffnung 20d, 20e, 20f sind jeweils im gleichen Öffnungsabstand D voneinander angeordnet. Auf diese Weise bilden die sechs Extrusionsöffnungen 20 zusammen ein gleichseitiges Dreieck, dessen Eckpunkte von den Extrusionsöffnungen 20a, 20f und 20c gebildet werden.

Die besonderen Vorteile dieser Anordnung sind in den Fig. 16 bis 18 dargestellt. Das Polardiagramm in Fig. 16 veranschaulicht zunächst die prinzipielle Möglichkeit, mithilfe eines Betriebs des in Fig. 15 bzw. des in Fig. 13 gezeigten Druckkopfes 2 beliebige globale Verfahrwinkel γ bezogen auf die x,y-Achsenebene unter kontinuierlicher Variation der erzeugbaren Gesamtextrusionsbreite B bedienen zu können, wobei in dem gezeigten Beispiel ein einheitlicher relativer Öffnungsabstand D/d = 3 und eine Variation der relativen Extrusionsbreite mit 0,5 < b/d < 4,0 zugrunde gelegt wurde. Die Öffnungszeile 24 des Druckkopfes 2 mit den Extrusionsöffnungen 20a, 20b, 20c liegt in einem Einstellwinkel α von 0° in der x,y-Achsenebene vor. Die mit diesen Extrusionsöffnungen 20a, 20b, 20c unter Variation der Gesamtbreite B nutzbaren globalen Verfahrwinkel γ sind im Polardiagramm mit "Linie 1" gekennzeichnet. Eine zweite lineare Öffnungszeile, die von den Extrusionsöffnungen 20a, 20d, 20f gebildet wird, liegt in einem Einstellwinkel α von 60° in der x,y-Achsenebene vor. Die mit diesen Extrusionsöffnungen 20a, 20d, 20f unter Variation der Gesamtbreite B druckbaren globalen Verfahrwinkel γ sind im Polardiagramm mit "Linie 2" gekennzeichnet. Eine dritte lineare Öffnungszeile, die von den Extrusionsöffnungen 20c, 20e, 20f gebildet wird, liegt in einem Einstellwinkel α von 120° in der x,y-Achsenebene vor. Die mit diesen Extrusionsöffnungen 20c, 20e, 20f unter Variation der Gesamtbreite B druckbaren globalen Verfahrwinkel γ sind im Polardiagramm mit "Linie 3" gekennzeichnet.

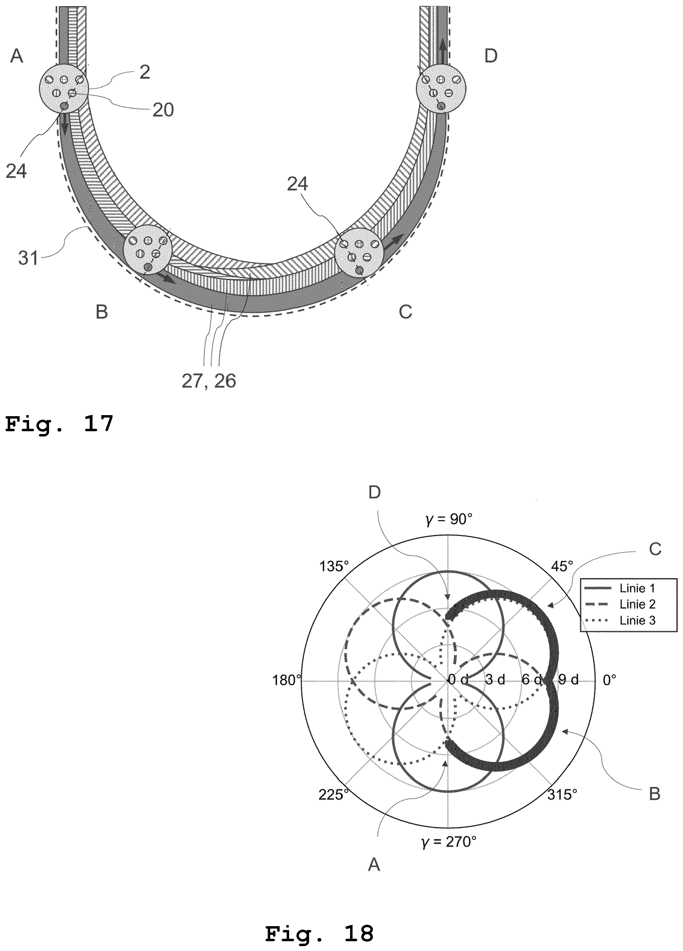

Fig. 17 zeigt ein Beispiel, wie sich diese Eigenschaften des Druckkopfes 2 im Betrieb mit Vorteil für die Erzeugung einer gekrümmten Formteilkontur entlang des Druckpfades 31 nutzen lassen. In dem Teilabschnitt des Druckpfades 31, der sich zwischen den Punkten A und B erstreckt, lässt sich mithilfe der linearen Öffnungszeile, die von den Extrusionsöffnungen 20a, 20d, 20f gebildet wird (Linie 2), eine geschlossene Konturfläche erzeugen. Der Teilabschnitt des Druckpfades 31, der sich zwischen den Punkten B und C erstreckt, wird sowohl mit der linearen Öffnungszeile, die von den Extrusionsöffnungen 20a, 20d, 20f gebildet wird (Linie 2), als auch mit der linearen Öffnungszeile, die von den Extrusionsöffnungen 20c, 20e, 20f gebildet wird (Linie 3), gedruckt. In dem Teilabschnitt des Druckpfades 31, der sich zwischen den Punkten C und D erstreckt, lässt sich allein mithilfe der linearen Öffnungszeile, die von den Extrusionsöffnungen 20c, 20e, 20f gebildet wird (Linie 3), eine geschlossene Konturfläche erzeugen.

Fig. 18 zeigt erneut das Polardiagramm, das bereits aus Fig. 16 bekannt ist, wobei der kontinuierliche Wechsel des Betriebsmodus des Druckkopfes 2 während der in Fig. 17 gezeigten Erzeugung der gekrümmten Formteilkontur durch Hervorhebung der entsprechenden Betriebslinien kenntlich gemacht wurde.

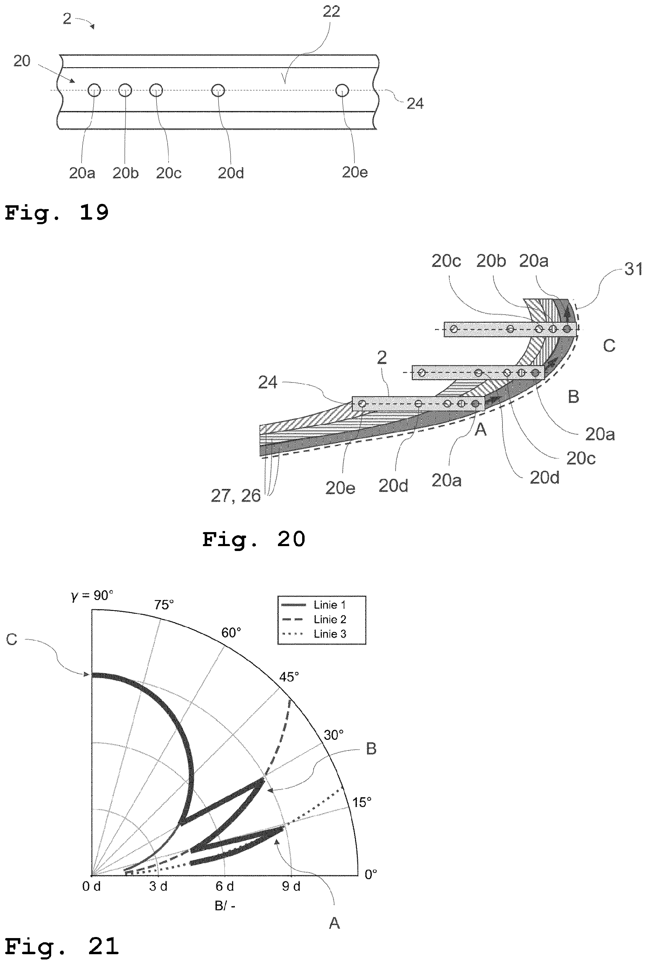

Fig. 19 zeigt einen Ausschnitt eines weiteren Druckkopfes 2 in Draufsicht auf die Ausgabeseite 22. Der Druckkopf 2 umfasst im gezeigten Ausschnitt eine direkte Aufeinanderfolge von fünf Extrusionsöffnungen 20, die in einer sich linear erstreckenden Öffnungszeile 24 angeordnet sind. Die erste und zweite Extrusionsöffnung 20a, 20b und die zweite und dritte Extrusionsöffnung 20b, 20c weisen jeweils den gleichen Öffnungsabstand D voneinander auf. Der Öffnungsabstand D zwischen der dritten und vierten Extrusionsöffnung 20c, 20d ist doppelt so groß, der Öffnungsabstand D zwischen der vierten und fünften Extrusionsöffnung 20d, 20e ist viermal so groß wie der Öffnungsabstand D zwischen den Extrusionsöffnungen 20a und 20b bzw. 20b und 20c. Ein Druckkopf 2 in dieser Ausführungsform hat den Vorteil, dass die Extrusionsöffnungen 20 kurzen Öffnungsabstands in relativen Verfahrwinkeln β bis zu 90° auch für Konturen genutzt werden können, während mit den Extrusionsöffnungen 20 großen Öffnungsabstands bei größeren relativen Verfahrwinkeln β (z. B. > 25°) teilgefüllte Bereiche und bei kleineren relativen Verfahrwinkeln β (z.

B. < 25°) Konturen erzeugt werden können. Durch mehrfaches Versetzen des Druckkopfes 2 lässt sich ein einheitlicher kleiner relativer Abstand der Extrusionsöffnungen 20 einstellen. Dadurch wird eine Nutzung aller Extrusionsöffnungen 20 bei vollflächigem Drucken ermöglicht.

Fig. 20 zeigt eine schematische Darstellung zur Erzeugung einer komplexen Formteilkontur durch erfindungsgemäßen Betrieb des Druckkopfes 2 aus Fig. 19. Durch eine selektive Nutzung der Extrusionsöffnungen 20a, 20d, 20e in einem ersten Teilabschnitt des Druckpfades 31 bis zum Punkt A, der Extrusionsöffnungen 20a, 20c, 20d in einem zweiten Teilabschnitt bis zum Punkt B und der Extrusionsöffnungen 20a, 20b, 20c in einem dritten Teilabschnitt über den Punkt B hinaus lässt sich mithilfe der unterschiedlichen Öffnungsabstände der Extrusionsöffnungen 20 entlang des gesamten Druckpfades 31 eine annähernd konstante Dicke der Bauteilkontur ohne Versetzung oder Drehung des Druckkopfes 2 erzeugen. Dadurch, dass zwischen den Teilabschnitten der Wechsel allein in jeweils einer einzigen Extrusionsöffnung 20 erfolgt während die beiden weiteren Extrusionsöffnungen 20 durchgängig Extrusionsmaterial 26 austragen, wird lediglich eine von drei Materialbahnen 27 unterbrochen und eine hohe Qualität der Formteilstruktur gewährleistet.

Ergänzend zeigt Fig. 21 ein zugehöriges Polardiagramm, das in ähnlicher Form bereits aus Fig. 6 bekannt ist. Das Diagramm zeigt für den Druckkopf 2 aus Fig. 19 mit dem Einstellwinkel $\alpha$ von 0° die erzeugbaren geschlossenen Gesamtextrusionsbreiten B in Abhängigkeit vom relativen Verfahrwinkel $\beta$ für eine Relativbewegung m = 1 und einer Variation der relativen Extrusionsbreite von 0 < b/d < 4,0. In dem gezeigten Fall wurde ein relativer Öffnungsabstand zwischen den Extrusionsöffnungen 20a, 20b, 20c von D/d = 3 ("Linie 1"), zwischen den Extrusionsöffnungen 20a, 20c, 20d von D/d = 6 ("Linie 2") und zwischen den Extrusionsöffnungen 20a, 20d, 20e von D/d = 12 ("Linie 3") zugrunde gelegt. Zusätzlich wurde der kontinuierliche Wechsel des Betriebsmodus des Druckkopfes 2 während der in Fig. 20 gezeigten Erzeugung der gekrümmten Formteilkontur in den Betriebslinien kenntlich gemacht.

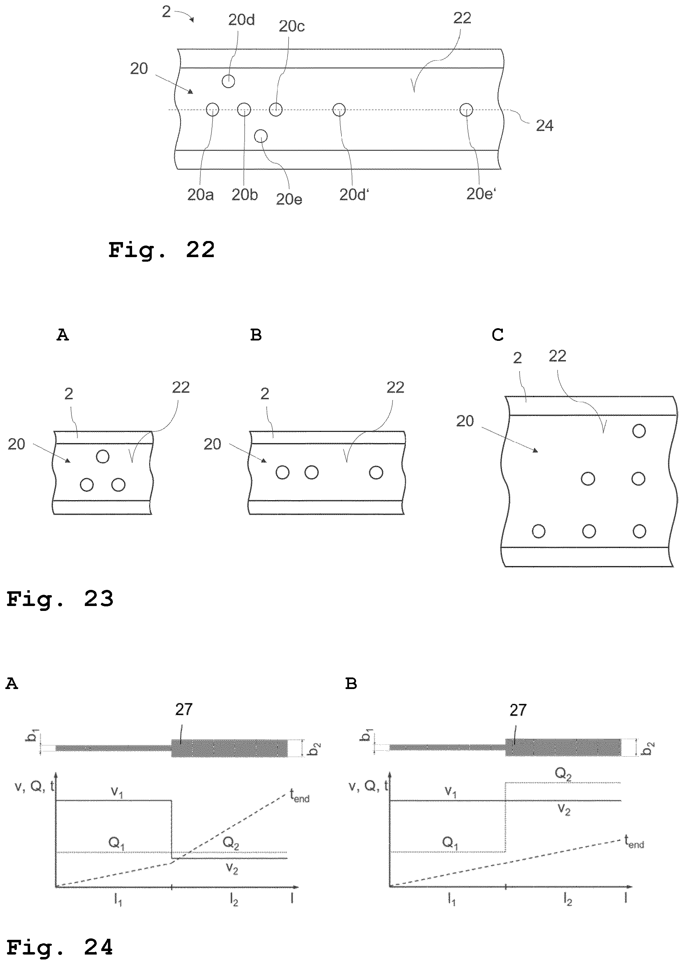

Selbstverständlich lassen sich die Anordnungen der Extrusionsöffnungen 20 auch beliebig miteinander kombinieren. Beispielsweise zeigt Fig. 22 eine Kombination der Anordnungen, die von den Druckköpfen 2 aus Fig. 10 und Fig. 19 bekannt sind.

Schließlich zeigt Fig. 23 weitere Ausgestaltungen von Druckköpfen, die zwar keinen Gegenstand der vorliegenden Erfindung bilden, mit denen sich aber dennoch teilweise die vorteilhaften technischen Wirkungen der Druckköpfe 2 insbesondere in Verbindung mit dem Verfahren gemäß des ersten Erfindungsaspektes erzielen lassen. Fig. 23A zeigt einen Referenz-Druckkopf 2 mit drei Extrusionsöffnungen 20, die im gleichseitigen Dreieck angeordnet sind. Fig. 23B zeigt einen Referenz-Druckkopf 2 mit drei Extrusionsöffnungen 20, bei denen der Öffnungsabstand der zweiten und dritten Extrusionsöffnung 20 das Dreifache des Öffnungsabstands zwischen der ersten und der zweiten Extrusionsöffnung 20 beträgt. Fig. 23C zeigt einen Referenz-Druckkopf 2 mit sechs Extrusionsöffnungen 20 in einer Anordnung als rechtwinkliges Dreieck.

Fig. 24 verdeutlicht schematisch die Vorteile der Erzeugung einer sich verbreiternden Materialbahn 27 mithilfe einer erfindungsgemäßen Veränderung der Materialförderrate Q (B) im Vergleich zu einer Veränderung der Verfahrgeschwindigkeit v des Druckkopfes 2 (A). Die Materialbahn 27 erstreckt sich über einen ersten Streckenabschnitt mit der Länge $l_1$ und einen zweiten Streckenabschnitt mit der Länge $l_2$. Die Materialbahn 27 hat im ersten Streckenabschnitt eine Bahnbreite $b_1$ und im zweiten Streckabschnitt eine Bahnbreite $b_2$. Über dem Verfahrweg l ist die Verfahrgeschwindigkeit v des Druckkopfes, die Materialförderrate Q und die Prozesszeit t aufgetragen.

Fig. 24A zeigt eine Änderung der Bahnbreite b der Materialbahn 27 durch eine Veränderung der Verfahrgeschwindigkeit v des Druckkopfes 2. Ausgehend von einer hohen Verfahrgeschwindigkeit $v_1$ im ersten Streckenabschnitt wird dabei zur Verbreiterung der Materialbahn 27 die Verfahrgeschwindigkeit in dem zweiten Streckenabschnitt reduziert, während der Materialaustrag pro Zeit Q unverändert bleibt. Im gezeigten Beispiel wird die Verfahrgeschwindigkeit $v_2$ auf ein Drittel der Geschwindigkeit $v_1$ im ersten Streckenabschnitt reduziert. Nachteilig ist, dass dadurch das Erzeugen der Materialbahn 27 in dem zweiten Streckenabschnitt dreimal länger dauert als im ersten Streckenabschnitt und somit zulasten der Gesamtprozesszeit $t_{end}$ geht. Hinzu kommt, dass die Bahnbreiten b von weiteren, parallel erzeugten Materialbahnen 27 (hier nicht gezeigt) zwangsläufig in dem gleichen Ausmaß verändert werden.

Wird die Änderung der Bahnbreite b der Materialbahn 27 dagegen bei konstanter Verfahrgeschwindigkeit v durch eine erfindungsgemäße Veränderung des Materialaustrags pro Zeit Q bewerkstelligt, können der erste und zweite Streckenabschnitt in der gleichen Zeit zurückgelegt werden (Fig. 24B), sodass die Gesamtprozesszeit $t_{end}$ reduziert wird. Das erfindungsgemäße Verfahren ist daher für den Betrieb von Mehrdüsen-Druckköpfen mit dem Ziel der Prozesszeitreduktion besonders vorteilhaft. Außerdem können die Bahnbreiten b weiterer, parallel abgelegter Materialbahnen 27 z. B. durch Beaufschlagung der Extrusionsdüsen mit individuellen Materialförderraten separat verändert werden.

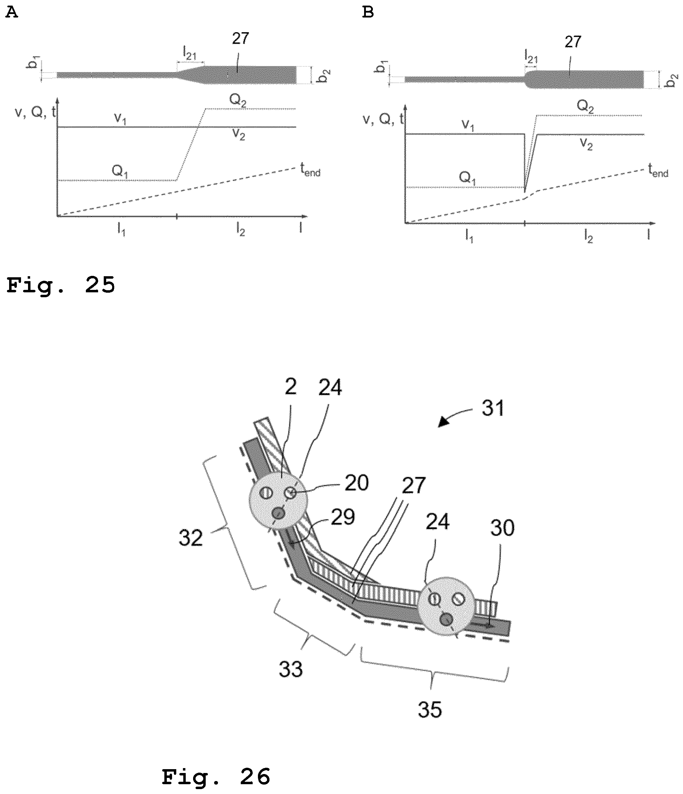

Fig. 25A zeigt das Verfahren, das in Fig. 24B idealisiert dargestellt wurde, unter Berücksichtigung einer in der Praxis häufig verzögerten Reaktion des Materialaustrags pro Zeit. Da die Veränderung des Materialaustrags pro Zeit typischerweise nicht beliebig schnell möglich ist, tritt die aus der Erhöhung des Materialaustrags Q resultierende Veränderung der Bahnbreite b in der Regel nicht spontan ein, sondern zieht sich aufgrund eines technisch bedingten kurzen Verzögerungszeitraums über eine gewisse Teilstrecke des zweiten Streckenabschnitts der Länge $l_{21}$ hin. Auf der während des Verzögerungszeitraumes zurückgelegten Teilstrecke $l_{21}$ wird die gewünschte Bahnbreite $b_2$ der Materialbahn 27 noch nicht erreicht.

Die Veränderung der Verfahrgeschwindigkeit v des Druckkopfes ist dagegen mit einer größeren Dynamik möglich. Sie kann daher während des Verzögerungszeitraumes kompensierend gezielt dort eingesetzt werden, wo der veränderte Materialaustrag pro Zeit Q noch nicht das gewünschte Niveau erreicht hat. Dadurch ist die Teilstrecke $l_{21}$ kürzer, auf der die tatsächlich erreichte Bahnbreite b der Materialbahn 27 geringer ist als die gewünschte, wie in Fig. 25B gezeigt ist. Im Anschluss stellen sich bei gewünschtem Materialaustrag pro Zeit $Q_2$ und erreichter Verfahrgeschwindigkeit $v_2$ die Vorteile des Verfahrens mit geändertem Materialaustrag pro Zeit ein, die bereits oben zu Fig. 24B vorgetragen wurden. Durch die Zusammenwirkung von einer Veränderung des Materialaustrag pro Zeit Q und einer Veränderung der Verfahrgeschwindigkeit v des Druckkopfes ergeben sich somit besondere Vorteile des erfindungsgemäßen Verfahrens.

Fig. 26 zeigt einen Druckkopf 2 mit drei Extrusionsöffnungen 20, von denen jeweils zwei Extrusionsöffnungen 20 eine lineare Öffnungszeile 24 mit unterschiedlichen Orientierungen in Bezug auf die x,y-Achsenebene bilden. Diese Düsenanordnung wird im gezeigten Beispiel genutzt, um entlang eines Druckpfads 31 in drei zusammenhängenden Teilabschnitten 32, 33, 35 unterschiedlicher Orientierung jeweils parallele Materialbahnen 27 zu erzeugen. Während im ersten und dritten Teilabschnitt 32, 35 zwei unterschiedliche Öffnungszeilen 24 genutzt werden, werden entlang des zweiten Teilabschnitts 33 die Extrusionsöffnungen beider Öffnungszeilen 24 eingesetzt, um zum einen entlang des zweiten Teilabschnitts 33 geschlossene Materialbahnen 27 erzeugen zu können, ohne dabei die Bahnbreite b der Materialbahnen 27 besonders groß auszuführen, und zum anderen gleichzeitig einen Übergangsbereich zwischen der jeweils alleinigen Nutzung der Öffnungszeilen 24 zu schaffen.

Die Anordnung von Extrusionsöffnungen 20 entlang einer Öffnungszeile 24 erlaubt eine vom Abstand der Extrusionsöffnungen 20 abhänge Variation der Verfahrrichtung 29, 30 in einem beschränkten Winkelbereich um die Öffnungszeile 24, in dem Kombinationen von Extrusionsöffnungen 20 gefunden werden können, die eine simultane Extrusion benachbarter paralleler Materialbahnen 27 erlauben. Die Kombination von Öffnungszeilen 24 unterschiedlicher Orientierung in einem Druckkopf 2 kann dann mit Vorteil genutzt werden, um den Winkelbereich möglicher Verfahrrichtungen 29, 30 zu erweitern.

Besonders vorteilhaft sind Kombinationen, die sich eine gemeinsame Extrusionsöffnung 20 teilen. Hierbei kann beim Wechsel der Nutzung der Öffnungszeilen 24 diese Extrusionsöffnung 20 durchgängig verwendet werden, um eine ununterbrochene Materialbahn 27 zu erzeugen.

Besonders vorteilhaft sind Anordnungen, in denen die Öffnungszeilen 24 so orientiert und ihre Extrusionsöffnungen 20 jeweils so beabstandet sind, dass sich das Ende der Nutzung einer Öffnungszeile 24 mit dem Beginn der Nutzung einer weiteren Öffnungszeile 24 überschneidet. Es werden Zwischenräume benachbarter Materialbahnen 27, die sich mithilfe einer Öffnungszeile 24 erzeugen lassen, durch den Austrag von Extrusionsmaterial 26 aus Extrusionsöffnungen 20 einer weiteren Öffnungszeile 24 aufgefüllt (vgl. Fig. 26 im zweiten Teilabschnitt 33).

Weiterhin besonders vorteilhaft sind Winkeldifferenzen zwischen benachbarten Öffnungszeilen 24, bei denen die Bildung von Übergangsbereichen wie in Fig. 26 gezeigt beim Wechsel zwischen benachbarten Öffnungszeilen 24 möglich ist und sich auf diese Weise der bedienbare Winkelbereich auf den Vollkreis erstreckt. Diese Charakteristik lässt sich beispielsweise bei Mehrdüsen-Druckköpfen 2 durch Anordnung von drei, vier, fünf, sechs (wie in Fig. 13 gezeigt), sieben oder acht Extrusionsöffnungen 20 in einem regelmäßigen Polygon um eine zentrale Extrusionsöffnung 20 herum erreichen, sodass die zentrale Extrusionsöffnung 20 zusammen mit umliegenden Extrusionsöffnungen jeweils mehrere lineare Öffnungszeilen 24 bildet.

Bezugszeichenliste

| | |
|---|---|
| 1 | Formteil |
| 2 | Druckkopf |
| 3 | Schicht |
| 4 | Druckfläche |
| 5 | Druckplattform |
| 8 | x-Achsenaktuator |
| 10 | y-Achsenaktuator |
| 12 | z-Achsenaktuator |
| 13 | Steuerungseinrichtung |
| 14 | Materialvorrat |
| 16 | Materialzuleitung |
| 17 | Heizvorrichtung |
| 18 | Materialzuführung |
| 19 | Extrusionsdüse |
| 20 | Extrusionsöffnung |
| 20a | erste Extrusionsöffnung |
| 20b | zweite Extrusionsöffnung |
| 20c | dritte Extrusionsöffnung |
| 20d | vierte Extrusionsöffnung |
| 20e | fünfte Extrusionsöffnung |
| 20f | sechste Extrusionsöffnung |
| 20g | siebte Extrusionsöffnung |
| 22 | Ausgabeseite |
| 24 | Öffnungszeile |
| 26 | Extrusionsmaterial |
| 27 | Materialbahn |
| 28 | Relativbewegung |

| 29 | erste Bewegungsrichtung |
|----|----|
| 30 | zweite Bewegungsrichtung |
| 31 | Druckpfad |
| 32 | erster Teilabschnitt |
| 33 | zweiter Teilabschnitt |
| 34 | Ventilblock |
| 35 | dritter Teilabschnitt |
| 36 | Ventil |
| 38 | Tempereireinrichtung |
| 40 | Kühleinrichtung |
| 50a | erste z-Achsenausrichtung |
| 50b | zweite z-Achsenausrichtung |
| 50c | dritte z-Achsenausrichtung |
| 52 | Oberflächenabschnitt |
| 100 | 3D-Druckvorrichtung |
| α | Einstellwinkel |
| β | relativer Verfahrwinkel |
| y | globaler Verfahrwinkel |
| d | Öffnungsdurchmesser |
| D | Öffnungsabstand |
| D/d | relativer Öffnungsabstand |
| b | Bahnbreite |
| b/d | relative Extrusionsbreite |
| B | Gesamtextrusionsbreite |
| l | Länge |
| m | Anzahl der Relativbewegungen |
| n | Anzahl der Extrusionsöffnungen |
| Q | Materialförderrate |
| t | Prozesszeit |
| v | Verfahrgeschwindigkeit |

**Patentansprüche**

1. Ein Verfahren zur Herstellung eines dreidimensionalen Formteils (1), wobei mit einem Druckkopf (2) ein Extrusionsmaterial (26) in mehreren, entlang einer z-Achse übereinander angeordneten Schichten (3) auf eine Druckfläche (4) aufgetragen und während des Auftragens zwischen dem Druckkopf (2) und der Druckfläche (4) Relativbewegungen (28) in einer x-Achse und/oder einer y-Achse einer sich senkrecht zur z-Achse erstreckenden x,y-Achsenebene durchgeführt werden,

   wobei der Druckkopf (2) auf einer der Druckfläche (4) zugewandten Ausgabeseite (22) mindestens eine sich linear erstreckende Öffnungszeile (24) mit zwei oder mehr Extrusionsöffnungen (20) zum Austragen des Extrusionsmaterials (26) aufweist und der Druckkopf (2) bezogen auf die Öffnungszeile (24) in einem Einstellwinkel (α) in der x,y-Achsenebene ausgerichtet ist, mit den Schritten:

   A) Durchführen einer Relativbewegung (28) mit einem ersten Einstellwinkel (α) des Druckkopfes (2) in eine erste Bewegungsrichtung (29) bei gleichzeitigem Austrag des Extrusionsmaterials (26) durch mindestens zwei der Extrusionsöffnungen (20) der Öffnungszeile (24),
   B) Durchführen einer Relativbewegung (28) mit dem ersten Einstellwinkel (α) des Druckkopfes (2) in eine von der ersten Bewegungsrichtung (29) abweichende zweite Bewegungsrichtung (30) bei gleichzeitigem Austrag des Extrusionsmaterials (26) durch die mindestens zwei Extrusionsöffnungen (20) aus Schritt A),

   **dadurch gekennzeichnet, dass** die Relativbewegung (28) in Schritt A) unmittelbar in die Relativbewegung (28) in Schritt B) übergeht, wobei in Schritt B) der Austrag des Extrusionsmaterials (26) pro Zeit durch mindestens eine der mindestens zwei Extrusionsöffnungen (20) in der zweiten Bewegungsrichtung (30) verändert wird, sodass mit der mindestens einen Extrusionsöffnung (20) eine breitere oder schmalere Materialbahn (27) des Extrusionsmaterials (26) auf der Druckfläche (4) und/oder einer der darauf angeordneten Schichten (3) aufgetragen wird als in der ersten Bewegungsrichtung (29) in Schritt A), und die Extrusionsöffnungen (20) mit einem unterschiedlichen Austrag des Extrusionsmaterials (26) pro Zeit beaufschlagt werden, sodass sie voneinander unterschiedliche Materialbahnbreiten des Extrusionsmaterials (26) erzeugen.

2. Das Verfahren nach Anspruch 1, **dadurch gekennzeichnet, dass** in Schritt B) zusätzlich eine Veränderung der Verfahrgeschwindigkeit (v) des Druckkopfes (2) während der Relativbewegung (28) durchgeführt wird, um die breitere oder schmalere Materialbahn (27) des Extrusionsmaterials (26) auf der Druckfläche (4) und/oder einer der darauf angeordneten Schichten (3) aufzutragen.

3. Das Verfahren nach einem der Ansprüche 1 oder 2, **dadurch gekennzeichnet, dass** in Schritt B) der Austrag des Extrusionsmaterials (26) pro Zeit durch mehrere Extrusionsöffnungen (20) der Öffnungszeile (24) in der zweiten Bewegungsrichtung (30) vergrößert oder verringert wird, sodass mit mehreren Extrusionsöffnungen (20) der Öffnungszeile (24) eine breitere oder schmalere Materialbahn (27) des Extrusionsmaterials (26) auf der Druckfläche (4) und/oder einer der darauf angeordneten Schichten (3) aufgetragen wird als in der ersten Bewegungsrichtung (29) in Schritt A).

4. Das Verfahren nach einem der Ansprüche 1 oder 2, **dadurch gekennzeichnet, dass** in Schritt B) der Austrag des Extrusionsmaterials (26) pro Zeit nur durch eine der mindestens zwei Extrusionsöffnungen (20) verändert wird.

5. Das Verfahren nach einem der Ansprüche 1 bis 4, **dadurch gekennzeichnet, dass** ein weiterer Verfahrensschritt

C) Durchführen mindestens einer weiteren Relativbewegung (28) mit dem ersten Einstellwinkel (α) des Druckkopfes (2) in von der ersten und zweiten Bewegungsrichtung (29) abweichende weitere Bewegungsrichtung (30) bei gleichzeitigem Austrag des Extrusionsmaterials (26) durch die mindestens zwei Extrusionsöffnungen (20) aus Schritt A) und Schritt B) durchgeführt wird, wobei der Austrag des Extrusionsmaterials (26) pro Zeit durch mindestens eine der mindestens zwei Extrusionsöffnungen (20) in der weiteren Bewegungsrichtung (30) verändert wird, sodass mit der mindestens einen Extrusionsöffnung (20) eine breitere oder schmalere Materialbahn (27) des Extrusionsmaterials (26) auf der Druckfläche (4) und/oder einer der darauf angeordneten Schichten (3) aufgetragen wird als in der ersten Bewegungsrichtung (29) in Schritt A) und der zweiten Bewegungsrichtung (29) in Schritt B),
wobei eine kontinuierliche Änderung der Bewegungsrichtungen (29, 30) in Kombination mit einer kontinuierlichen Änderung des Austrags des Extrusionsmaterials (26) pro Zeit durch die mindestens eine der mindestens zwei Extrusionsöffnungen (20) durchgeführt wird.

6. Das Verfahren nach einem der Ansprüche 1 bis 5, **dadurch gekennzeichnet, dass** die sich linear erstreckende Öffnungszeile (24) mindestens drei Extrusionsöffnungen (20) umfasst, die in einem gleichmäßigen Öffnungsabstand (D) voneinander angeordnet sind, wobei in Schritt B) der gleichzeitige Austrag des Extrusionsmaterials (26) durch eine kleinere Anzahl von Extrusionsöffnungen (20) der Öffnungszeile (24) als in Schritt A) erfolgt und in Schritt B) mit mehreren Extrusionsöffnungen (20) in der zweiten Bewegungsrichtung (30) eine breitere Materialbahn (27) des Extrusionsmaterials (26) auf der Druckfläche (4) und/oder einer der darauf angeordneten Schichten (3) aufgetragen wird als in der ersten Bewegungsrichtung (29) in Schritt A).

7. Das Verfahren nach einem der Ansprüche 1 bis 6, **dadurch gekennzeichnet, dass** die zweite Bewegungsrichtung (30) auf die x,y-Achsenebene bezogen in einem betragsmäßig kleineren Verfahrwinkel (β) relativ zum ersten Einstellwinkel (α) als die erste Bewegungsrichtung (29) verläuft und in der zweiten Bewegungsrichtung (30) der Austrag des Extrusionsmaterials (26) pro Zeit durch die mindestens eine der mindestens zwei Extrusionsöffnungen (20) in der zweiten Bewegungsrichtung (29) verringert wird, sodass eine schmalere Materialbahn (27) des Extrusionsmaterials (26) auf der Druckfläche (4) und/oder einer der darauf angeordneten Schichten (3) aufgetragen wird.

8. Das Verfahren nach einem der Ansprüche 1 bis 6, **dadurch gekennzeichnet, dass** die zweite Bewegungsrichtung (30) auf die x,y-Achsenebene bezogen in einem betragsmäßig größeren Verfahrwinkel (β) relativ zum ersten Einstellwinkel (α) als die erste Bewegungsrichtung (29) verläuft und in der zweiten Bewegungsrichtung (30) der Austrag des Extrusionsmaterials (26) pro Zeit durch mindestens eine der mindestens zwei Extrusionsöffnungen (20) in der zweiten Bewegungsrichtung (29) vergrößert wird, sodass eine breitere Materialbahn (27) des Extrusionsmaterials (26) auf der Druckfläche (4) und/oder einer der darauf angeordneten Schichten (3) aufgetragen wird.

9. Das Verfahren nach einem der Ansprüche 1 bis 8, **dadurch gekennzeichnet, dass** die breitere Materialbahn (27) eine Bahnbreite (b) aufweist, die ein 1,1-faches bis 5,0-faches vom Durchmesser (d) der Extrusionsöffnung (20) und/oder von der Bahnbreite (b) der schmaleren Materialbahn (27) beträgt.

10. Das Verfahren nach einem der Ansprüche 1 bis 9, **dadurch gekennzeichnet, dass** die mindestens zwei Extrusionsöffnungen (20) in direkter Aufeinanderfolge in der Öffnungszeile (24) vorliegen.

11. Das Verfahren nach einem der Ansprüche 1 bis 9, **dadurch gekennzeichnet, dass** zwischen den mindestens zwei Extrusionsöffnungen (20) mindestens eine weitere Extrusionsöffnung (20) der Öffnungszeile (24) angeordnet ist.

12. Eine Vorrichtung (100) zur Herstellung eines dreidimensionalen Formteils (1), umfassend

eine Druckplattform (5) mit einer Druckfläche (4),
einen Druckkopf (2) zum Auftragen eines Extrusionsmaterials (26) in mehreren, entlang einer z-Achse übereinander angeordneten Schichten (3) auf die Druckfläche (4),
eine Antriebseinrichtung (8, 10, 12), die dazu eingerichtet ist, während des Auftragens zwischen dem Druckkopf (2) und der Druckfläche (4) Relativbewegungen (28) in einer x-Achse und/oder einer y-Achse einer sich senkrecht zur z-Achse erstreckenden x,y-Achsenebene auszuführen, und
eine computerbasierte Steuerungseinrichtung (13), die mit der Antriebseinrichtung (8, 10, 12) betriebsfähig verbunden ist und dazu eingerichtet ist, das Auftragen des Extrusionsmaterials (26) in den entlang der z-Achse übereinander angeordneten Schichten (3) auf die Druckfläche (4) zu kontrollieren,

**dadurch gekennzeichnet, dass** die computerbasierte Steuerungseinrichtung (13) zur Durchführung des Verfahrens nach einem der Ansprüche 1 bis 11 eingerichtet ist.

## Claims

1. A method for producing a three-dimensional shaped object (1), wherein an extrusion material (26) is applied to a printing surface (4) by means of a printhead (2) in a plurality of layers (3) arranged one above the other along a z-axis, and relative movements (28) in an x-axis and/or a y-axis of an x,y-axis plane extending perpendicularly to the z-axis are performed between the printhead (2) and the printing surface (4) during application,

   wherein the printhead (2) has, on an output side (22) facing the printing surface (4), at least one linearly extended aperture row (24) with two or more extrusion apertures (20) for extruding the extrusion material (26), and the printhead (2) is arranged with respect to the aperture row (24) at a setting angle ($\alpha$) in the x,y-axis plane, comprising the steps of:

   A) performing a relative movement (28) with a first setting angle ($\alpha$) of the printhead (2) in a first movement direction (29) while simultaneously extruding the extrusion material (26) through at least two of the extrusion apertures (20) of the aperture row (24),
   B) performing a relative movement (28) with the first setting angle ($\alpha$) of the printhead (2) in a second movement direction (30) deviating from the first movement direction (29) while simultaneously extruding the extrusion material (26) through the at least two extrusion apertures (20) from step A),

   **characterized in that** the relative movement (28) in step A) transitions directly into the relative movement (28) in step B), wherein in step B) the extrusion of the extrusion material (26) per time through at least one of the at least two extrusion apertures (20) in the second direction of movement (30) is changed, so that with the at least one of the at least two extrusion apertures (20) a wider or narrower material swath (27) of the extrusion material (26) is applied to the printing surface (4) and/or one of the layers (3) arranged thereon than in the first movement direction (29) in step A), and the extrusion apertures (20) are set to a different extrusion of the extrusion material (26) per time, so that they produce different material swath widths of the extrusion material (26) from one another.

2. The method according to claim 1, **characterized in that** in step B) additionally a change of the traversing speed (v) of the printhead (2) during the relative movement (28) is performed in order to apply the wider or narrower material swath (27) of the extrusion material (26) on the printing surface (4) and/or on one of the layers arranged (3) thereon.

3. The method according to one of claims 1 or 2, **characterized in that** in step B) the extrusion of the extrusion material (26) per time is increased or decreased in the second direction of movement (30) through a plurality of extrusion apertures (20) of the aperture row (24), so that with a plurality of extrusion apertures (20) of the aperture row (24) a wider or narrower material swath (27) of the extrusion material (26) is applied to the printing surface (4) and/or one of the layers (3) arranged thereon than in the first movement direction (29) in step A).

4. The method according to one of claims 1 or 2, **characterized in that** in step B) the extrusion of the extrusion material (26) per time is only changed through one of the at least two extrusion apertures (20).

5. The method according to one of claims 1 to 4, **characterized in that** a further method step

   C) performing at least one further relative movement (28) with the first setting angle ($\alpha$) of the print head (2) in a further movement direction (30) deviating from the first and second movement direction (29) while simultaneously extruding the extrusion material (26) through the at least two extrusion apertures (20) from step A) and step B),

   is performed, wherein the extrusion of the extrusion material (26) per time through at least one of the at least two extrusion apertures (20) in the further movement direction (30) is changed, so that a wider or narrower material swath (27) of the extrusion material (26) is applied to the printing surface (4) and/or one of the layers (3) arranged thereon with the at least one extrusion aperture (20) than in the first movement direction (29) in step A) and in the second direction of movement (29) in step B),

   wherein a continuous change of the movement direction (29, 30) is performed in combination with a continuous change of the extrusion of the extrusion material (26) per time through the at least one of the at least two extrusion apertures (20).

6. The method according to any one of claims 1 to 5, **characterized in that** the linearly extending aperture row (24) comprises at least three extrusion apertures (20) arranged at a uniform aperture spacing (D) from each other, wherein in step B) the simultaneous extrusion of the extrusion material (26) is performed through a smaller number of extrusion apertures (20) of the aperture row (24) than in step A) and in step B) with a plurality of extrusion apertures (20) in the second movement direction (30) a wider material swath (27) of the extrusion material (26) is applied to the printing surface (4) and/or one of the layers (3) arranged thereon than in the first movement direction (29) in step A).

7. The method according to any one of claims 1 to 6, **characterized in that** the second movement direction (30) extends in the x,y-axis plane at an amountwise smaller traversing angle ($\beta$) relative to the first setting angle ($\alpha$) than the first movement direction (29), and in the second movement direction (30) the extrusion of the extrusion material (26) per time through the at least one of the at least two extrusion openings (20) in the second direction of movement (29) is reduced, so that a narrower material swath (27) of the extrusion material (26) is applied to the printing surface (4) and/or one of the layers (3) arranged thereon.

8. The method according to any one of claims 1 to 6, **characterized in that** the second movement direction (30) extends in the x,y-axis plane at an amountwise larger traversing angle ($\beta$) relative to the first setting angle ($\alpha$) than the first movement direction (29), and in the second movement direction (30) the extrusion of the extrusion material (26) per time through the at least one of the at least two extrusion openings (20) in the second direction of movement (29) is increased, so that a wider material swath (27) of the extrusion material (26) is applied to the printing surface (4) and/or one of the layers (3) arranged thereon.

9. The method according to any one of claims 1 to 8, **characterized in that** the wider material swath (27) has a swath width (b) that is 1.1 times to 5.0 times the diameter (d) of the extrusion aperture (20) and/or the swath width (b) of the narrower material swath (27).

10. The method according to any one of claims 1 to 9, **characterized in that** the at least two extrusion apertures (20) are in direct juxtaposition in the aperture row (24).

11. The method according to any one of claims 1 to 9, **characterized in that** at least one further extrusion aperture (20) of the aperture row (24) is arranged between the at least two extrusion apertures (20).

12. An apparatus (100) for producing a three-dimensional shaped object (1), comprising

a printing platform (5) having a printing surface (4),
a printhead (2) for applying an extrusion material (26) to the printing surface (4) in a plurality of layers (3) arranged one above another along a z-axis,
a drive means (8, 10, 12) configured to perform relative movements (28) in an x-axis and/or a y-axis of an x,y-axis plane extending perpendicular to the z-axis between the printhead (2) and the printing surface (4) during the application, and
a computer-based control means (13) operatively connected to the drive means (8, 10, 12) and configured to control the application of the extrusion material (26) in the layers (3) arranged one above another along the z-axis on the printing surface (4),
**characterized in that** the computer-based control means (13) is configured to perform a method according to any one of claims 1 to 11.

**Revendications**

1. Procédé pour la fabrication d'une pièce moulée tridimensionnelle (1), dans lequel un matériau d'extrusion (26) est appliqué avec une tête d'impression (2) sur une surface d'impression (4) en plusieurs couches (3) disposées de manière à être superposées le long d'un axe z et, pendant l'application, des mouvements relatifs (28) sont réalisés entre la tête d'impression (2) et la surface d'impression (4) dans un axe x et/ou un axe y d'un plan des axes x, y s'étendant perpendiculairement à l'axe z,

dans lequel la tête d'impression (2) présente, sur un côté de sortie (22) tourné vers la surface d'impression (4), au moins une ligne d'ouvertures (24) s'étendant linéairement et comportant deux ouvertures d'extrusion (20) ou plus pour l'évacuation du matériau d'extrusion (26) et la tête d'impression (2) est orientée, par rapport à la ligne d'ouvertures (24), selon un angle de réglage ($\alpha$) dans le plan des axes x, y, comportant les étapes consistant à :

A) réaliser un mouvement relatif (28) avec un premier angle de réglage ($\alpha$) de la tête d'impression (2) dans une première direction de mouvement (29) en évacuant de manière concomitante le matériau d'extrusion (26) à travers au moins deux des ouvertures d'extrusion (20) de la ligne d'ouvertures (24),

B) réaliser un mouvement relatif (28) avec le premier angle de réglage ($\alpha$) de la tête d'impression (2) dans une seconde direction de mouvement (30) s'écartant de la première direction de mouvement (29) en évacuant de manière concomitante le matériau d'extrusion (26) à travers les au moins deux ouvertures d'extrusion (20) de l'étape A),

**caractérisé en ce que** le mouvement relatif (28) à l'étape A) se transforme directement en mouvement relatif (28) à l'étape B), dans lequel, à l'étape B), l'évacuation du matériau d'extrusion (26) par unité de temps à travers au moins l'une des au moins deux ouvertures d'extrusion (20) dans la seconde direction de mouvement (30) est modifiée, de sorte qu'avec l'au moins une ouverture d'extrusion (20), une bande de matériau (27) du matériau d'extrusion (26) est appliquée sur la surface d'impression (4) et/ou sur l'une des couches (3) disposées sur celle-ci de manière à être plus large ou plus étroite que dans la première direction de mouvement (29) à l'étape A), et les ouvertures d'extrusion (20) sont soumises à une évacuation différente du matériau d'extrusion (26) par unité de temps, de sorte qu'elles produisent des largeurs de bande de matériau du matériau d'extrusion (26) différentes les unes des autres.

2. Procédé selon la revendication 1, **caractérisé en ce que,** à l'étape B), une modification de la vitesse de déplacement (v) de la tête d'impression (2) pendant le mouvement relatif (28) est en outre réalisée, afin d'appliquer la bande de matériau (27) du matériau d'extrusion (26) plus large ou plus étroite sur la surface d'impression (4) et/ou sur l'une des couches (3) disposées sur celle-ci.

3. Procédé selon l'une des revendications 1 ou 2, **caractérisé en ce que,** à l'étape B), l'évacuation du matériau d'extrusion (26) par unité de temps à travers plusieurs ouvertures d'extrusion (20) de la ligne d'ouvertures (24) dans la seconde direction de mouvement (30) est augmentée ou diminuée, de sorte qu'avec plusieurs ouvertures d'extrusion (20) de la ligne d'ouvertures (24), une bande de matériau (27) du matériau d'extrusion (26) est appliquée sur la surface d'impression (4) et/ou sur l'une des couches (3) disposées sur celle-ci de manière à être plus large ou plus étroite que dans la première direction de mouvement (29) à l'étape A).

4. Procédé selon l'une des revendications 1 ou 2, **caractérisé en ce que,** à l'étape B), l'évacuation du matériau d'extrusion (26) par unité de temps n'est modifiée qu'à travers l'une des au moins deux ouvertures d'extrusion (20).

5. Procédé selon l'une des revendications 1 à 4, **caractérisé en ce qu'**une étape de procédé supplémentaire consistant à

C) réaliser au moins un autre mouvement relatif (28) avec le premier angle de réglage ($\alpha$) de la tête d'impression (2) dans une autre direction de mouvement (30) s'écartant de la première et de la seconde direction de mouvement (29) en évacuant de manière concomitante le matériau d'extrusion (26) à travers les au moins deux ouvertures d'extrusion (20) à l'étape A) et à l'étape B)

est réalisée, dans lequel l'évacuation du matériau d'extrusion (26) par unité de temps à travers au moins l'une des au moins deux ouvertures d'extrusion (20) dans l'autre direction de mouvement (30) est modifiée, de sorte qu'avec l'au moins une ouverture d'extrusion (20), une bande de matériau (27) du matériau d'extrusion (26) est appliquée sur la surface d'impression (4) et/ou sur l'une des couches (3) disposées sur celle-ci de manière à être plus large ou plus étroite que dans la première direction de mouvement (29) à l'étape A) et dans la seconde direction de mouvement (29) à l'étape B),

dans lequel une modification continue des directions de mouvement (29, 30) est réalisée en combinaison avec une modification continue de l'évacuation du matériau d'extrusion (26) par unité de temps à travers l'au moins une des au moins deux ouvertures d'extrusion (20).

6. Procédé selon l'une des revendications 1 à 5, **caractérisé en ce que** la ligne d'ouvertures (24) s'étendant linéairement comprend au moins trois ouvertures d'extrusion (20) disposées à une distance d'ouverture (D) régulière les unes par rapport aux autres, dans lequel, à l'étape B), l'évacuation concomitante du matériau d'extrusion (26) est effectuée à travers un plus petit nombre d'ouvertures d'extrusion (20) de la ligne d'ouvertures (24) qu'à l'étape A), et, à l'étape B), avec plusieurs ouvertures d'extrusion (20) dans la seconde direction de mouvement (30), une bande de matériau (27) du matériau d'extrusion (26) est appliquée sur la surface d'impression (4) et/ou sue l'une des couches (3) disposées sur celle-ci de manière à être plus large que dans la première direction de mouvement (29) à l'étape A).

7. Procédé selon l'une des revendications 1 à 6,

**caractérisé en ce que** la seconde direction de mouvement (30) s'étend, par rapport au plan des axes x, y, selon un angle de déplacement (β) plus petit en valeur absolue par rapport au premier angle de réglage (α) que celui de la première direction de mouvement (29) et, dans la seconde direction de mouvement (30), l'évacuation du matériau d'extrusion (26) par unité de temps à travers l'au moins une des au moins deux ouvertures d'extrusion (20) dans la seconde direction de mouvement (29) est diminuée, de sorte qu'une bande de matériau (27) du matériau d'extrusion (26) plus étroite est appliquée sur la surface d'impression (4) et/ou sur l'une des couches (3) disposées sur celle-ci.

8. Procédé selon l'une des revendications 1 à 6, **caractérisé en ce que** la seconde direction de mouvement (30) s'étend, par rapport au plan des axes x, y, selon un angle de déplacement (β) plus grand en valeur absolue par rapport au premier angle de réglage (α) que celui de la première direction de mouvement (29) et, dans la seconde direction de mouvement (30), l'évacuation du matériau d'extrusion (26) par unité de temps à travers au moins l'une des au moins deux ouvertures d'extrusion (20) dans la seconde direction de mouvement (29) est augmentée, de sorte qu'une bande de matériau (27) du matériau d'extrusion (26) plus large est appliquée sur la surface d'impression (4) et/ou sur l'une des couches (3) disposées sur celle-ci.

9. Procédé selon l'une des revendications 1 à 8, **caractérisé en ce que** la bande de matériau (27) plus large présente une largeur de bande (b) qui est de 1,1 fois à 5,0 fois le diamètre (d) de l'ouverture d'extrusion (20) et/ou la largeur de bande (b) de la bande de matériau (27) plus étroite.

10. Procédé selon l'une des revendications 1 à 9, **caractérisé en ce que** les au moins deux ouvertures d'extrusion (20) sont présentes en succession directe dans la ligne d'ouvertures (24).

11. Procédé selon l'une des revendications 1 à 9, **caractérisé en ce qu'**au moins une autre ouverture d'extrusion (20) de la ligne d'ouvertures (24) est disposée entre les au moins deux ouvertures d'extrusion (20).

12. Dispositif (100) pour la fabrication d'une pièce moulée tridimensionnelle (1), comprenant

une plate-forme d'impression (5) comportant une surface d'impression (4),
une tête d'impression (2) pour l'application d'un matériau d'extrusion (26) en plusieurs couches (3) disposées de manière à être superposées le long d'un axe z sur la surface d'impression (4),

un appareil d'entraînement (8, 10, 12) qui est conçu pour effectuer, pendant l'application entre la tête d'impression (2) et la surface d'impression (4), des mouvements relatifs (28) dans un axe x et/ou un axe y d'un plan des axes x, y s'étendant perpendiculairement à l'axe z, et
un appareil de commande (13) basé sur un ordinateur qui est relié de manière opérationnelle à l'appareil d'entraînement (8, 10, 12) et qui est configuré pour contrôler l'application du matériau d'extrusion (26) en couches (3) disposées de manière à être superposées le long de l'axe z sur la surface d'impression (4),
**caractérisé en ce que** l'appareil de commande (13) basé sur un ordinateur est configuré pour réaliser le procédé selon l'une des revendications 1 à 11.

**Fig. 1**

**Fig. 2**

A

31

33

32

B

30

β

2

29

27

β

20 24

27

C

30

2

β

29

27

β

20 24

27

D

30

2

β

29

27

β

20 24

27

**Fig. 3**

A

20

2

28

31

27, 26

B

20

2

28

31

27, 26

**Fig. 4**

Fig. 5

Fig. 6

Fig. 7

Fig. 8

Fig. 9

Fig. 10

A

18

40

19

38

20

B

18

19

38

20

C

18

34

36

19

38

20

**Fig. 11**

27, 26

31

20d

24

β

2

20c

20e

20a 20b

**Fig. 12**

2

20d    20e    22

20

24

20a    20b    20c

20f    20g

**Fig. 13**

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20160325498 A1
- US 8827684 B1
- WO 2015153400 A1
- US 20170157828 A1
- US 20170157831 A1
- WO 2017215641 A1
- US 20190152154 A1
- US 20190030819 A1
- US 20190322044 A1
- EP 3414521 A1
- US 2016311159 A1